# EUROPÄISCHE PATENTSCHRIFT

(11) **EP 3 579 678 B1**
(45) Veröffentlichungstag und Bekanntmachung des Hinweises auf die Patenterteilung: **11.11.2020**
(21) Anmeldenummer: 18707856.3
(22) Anmeldetag: 09.02.2018
(51) Int. Cl.: A01B 9/00

(54) **PFLUGVORRICHTUNG MIT ZWEI SCHNEIDEELEMENTEN**
PLOUGH DEVICE COMPRISING TWO CUTTING ELEMENTS
DISPOSITIF DE LABOURAGE MUNI DE DEUX ÉLÉMENTS DE COUPE

(30) Priorität: 10.02.2017 DE 102017102683
(43) Veröffentlichungstag der Anmeldung: 18.12.2019
(73) Patentinhaber: Huber, Franz-Ferdinand, 8430 Leibnitz (AT)
(72) Erfinder: Huber, Franz-Ferdinand, 8430 Leibnitz (AT)
(74) Vertreter: Leske, Thomas
(86) Internationale Anmeldenummer: PCT/EP2018/053313
(87) Internationale Veröffentlichungsnummer: WO 2018/146263

(56) Entgegenhaltungen:
- EP-A1- 0 025 623
- DE-A1- 3 541 490
- GB-A- 1 385 951
- GB-A- 2 063 031

## Beschreibung

### Technisches Gebiet

Die vorliegende Erfindung betrifft eine Pflugvorrichtung zum Pflügen eines Bodens. Ferner betrifft die vorliegende Erfindung ein Verfahren zum Pflügen eines Bodens.

### Hintergrund der Erfindung

Pflüge gelten als eines der wichtigsten Bodenbearbeitungsgeräte in der Landwirtschaft und sind in verschiedensten Varianten verfügbar. Pflüge weisen beispielsweise eine Pflugschar, welche den sogenannten Erdbalken von dem umzupflügenden Feld oder der Wiese abschneidet, sowie ein Streichblech auf, welches ein üblicherweise gekrümmtes, schraubenförmiges und an die Pflugschar anschließendes Metallelement ist, welches den Erdbalken umdreht bzw. wendet.

Die Pflugschar schneidet beispielsweise waagerecht und senkrecht mit Hilfe der Streichblechkante aus dem Boden einen Erdbalken heraus. Die Pflugschar leitet den Erdbalken anschließend zum angrenzenden Streichblech weiter. Diese nimmt den Balken auf, hebt ihn aufgrund seiner gebogenen Form zunächst an und legt ihn anschließend zur Seite hin ab. Der Erdbalken wird herkömmlich mittels Pflugschar aus dem Boden "herausgescharrt" bzw. "herausgebrochen". D.h. die Pflugschar und die untere Streichblechkante des Streichblechs scharren / brechen den Erdbalken mittels "starrer Pflug-Komponenten" aus dem Erdboden heraus, wenden den Erdbalken und erzeugen zugleich die Furchensohle.

Dieser Teilvorgang ist beim Streichblech- Pflug besonders zugkraftaufwendig.

Die Furchenbreite im Boden beträgt beispielsweise ca. 35- 50 cm, und die Furchentiefe beträgt beispielsweise ca. 15 bis 30 cm.

Der Kraftaufwand ist bei konventionellen Pflügen mit starren Pflugkörpern wesentlich von den großen Reibungskräften (Bodenreaktionskräften), die während eines Durchziehens des Pflugs auftreten, abhängig. Ferner wird ein hoher Kraftaufwand erforderlich, um den Pflug in Pflügrichtung zu halten, da aufgrund des Herauslösens des Erdbalkens hohe Seitenkräfte auf den Pflug wirken.

In Abhängigkeit von der Bodenbeschaffung, d.h. dem Feuchtegehalt des Bodens und der Bodenart (Anteil von Lehm, Ton und Sand und dgl.), ist ein unterschiedlich hoher Kraftaufwand erforderlich. Ferner wird der Erdbalken mittels herkömmlichen Pflügen am Stück herausgelöst und gewendet, ohne dass dieser aufgetrennt bzw. gelockert wird. Dies hat zur Folge, dass die vom Boden entfernten und gewendeten Erdbalken verdichtet auf dem Feldboden vorliegen.

GB1385951 offenbart eine Pflugvorrichtung nach dem Oberbegriff des Anspruchs 1. In DE 35 41 490 A1 ist eine Bodenbearbeitungsmaschine beschrieben, welche ein Scheibensech und einen Untergrundlockerer aufweist. Das Scheibensech bildet ein erstes Schneidelement, wohingegen der Untergrundlockerer dafür vorgesehen ist, den Untergrund als zum Scheibensech nachlaufender Einrichtung zu lockern. Diese Untergrundlockerungsvorrichtung dient nicht dazu, in Pflügrichtung einen Seitenbereich eines Erdbalkens des Bodens abzuscheiden, sondern ist nach dem Scheibensech angeordnet und ist auch nicht als scheibenartiges Schneidelement ausgebildet. Aufgrund des dem Untergrundlockerer voraus angeordneten Scheibensechs wird mit letzterem eine Furche geschnitten, in welche die Schäfte des Untergrundlockerers gelangen. Damit die Untergrundlockerung zuverlässig ausgeführt werden kann, ist der Untergrundlockerer als angetriebenes Element ausgebildet. Wenn eine derartige Bodenbearbeitungsmaschine durch den Boden gezogen werden muss, entstehen wegen der umlaufenden Lockerungseinrichtungen der Untergrundlockerungseinrichtung ein relativ hoher Zugkraftaufwand sowie relativ hoher Antriebsleistungsaufwand für die Untergrundlockerungseinrichtung, welche nachteilig sind, weil zum einen diese großen Zugkräfte von kräftigeren Maschinen nur aufgebracht werden können und weil zum anderen dadurch ein relativ hoher Kraftstoffverbrauch erforderlich ist. Abgesehen davon wird die mit dem Untergrundlockerer zu erzielende Bodenverbesserung wieder teilweise dadurch kompensiert, dass mit schwereren Maschinen auf dem Feld eine höhere Bodenverfestigung auftritt.

In DE 35 41 438 A1 ist ein Pflugkörper für Bodenbearbeitungsgeräte beschrieben, bei welchem eine Pflugschar einer Hohlscheibe vorgeordnet ist. Es ist ein einziges Scheibensech in Form einer Hohlscheibe angeordnet, welche an ihrem Auslauf noch eine Abstreichvorrichtung aufweist, mit welcher die in der Hohlscheibe zum Wenden des Erdbalkens vorgesehene Erde abstreift wird. Da der der Hohlscheibe vorgeordnete Pflugkörper in ungeschnittene Erde eindringt, ist dafür auch ein relativ großer Zugkraftaufwand erforderlich, welcher die zuvor beschriebenen Nachteile ebenfalls einschließt.

In DE 20 2014 105 576 U1 ist ein Bodenbearbeitungssystem beschrieben, welches ein erstes Bodenbearbeitungsgerät mit Zinken aufweist, um einen ungeschnittenen Boden anzuheben und tief aufzubrechen, und welches ein zweites Bodenbearbeitungssystem aufweist, welches in Fahrtrichtung hinter dem ersten Bodenbearbeitungsgerät angeordnet ist und welches einen angetriebenen Rotor aufweist, um beispielsweise Pflanzenreste in den vom ersten Bodenbearbeitungsgerät aufgebrochenen Boden einarbeiten soll, wobei des Weiteren eine Sähmaschine vorgesehen ist, um in Fahrtrichtung hinter den Rotor Saatgut in den Boden einzubringen. Die eigentliche Pflugeinrichtung ist damit das erste Bodenbearbeitungsgerät, welches lediglich ein Scheibensech aufweist, welches in Pflügrichtung dem eigentlichen gewöhnlichen Pflug vorgeordnet ist. Ein Erdbalken kann mit einer derartigen Pflügvorrichtung nicht erzeugt, angehoben oder gar gewendet werden.

Und schließlich ist in DE 199 02 914 A1 eine Bodenbearbeitungsmaschine beschrieben, welche ebenfalls, lediglich in Mehrfachanordnung, einem oder mehreren Scheibensechen vorgeordnete Pflüge aufweist. Auch bei dieser bekannten Bodenbearbeitungsmaschine wird in Pflügrichtung kein Erdbalken vom Boden einer Furche abgeschnitten. Vielmehr wird ein solcher Erdbalken nicht erzeugt, durch den Pflug wird der Boden lediglich in kleineren schollenartigen Erdmengen gewendet. Es ist jedenfalls keine Doppelanordnung von zwei scheibenartigen bzw. tellerartigen Schneidelementen beschrieben, welche in definierter Art und Weise aufeinander abgestimmt sind und zusammenwirken.

### Darstellung der Erfindung

Es ist die Aufgabe der vorliegenden Erfindung, eine Pflugvorrichtung mit einem geringen Zugaufwand bereitzustellen, welche ferner ein nahezu einsaatfertiges Saatbeet hinterlässt.

Die Aufgabe wird mit einer Pflugvorrichtung zum Pflügen eines Bodens mit den Merkmalen gemäß Anspruch 1 und mit einem Verfahren zum Pflügen eines Bodens mit den Merkmalen gemäß Anspruch 24 gelöst. Zweckmäßige Weiterbildungen sind in den jeweiligen abhängigen Ansprüchen definiert.

Ein wesentlicher Vorteil der Erfindung besteht darin, dass die Reib- und Scherkräfte, das heißt die Bodenreaktionskräfte, des durch den Boden sich bewegenden Pfluggerätes minimiert werden können. Dadurch wird eine Pflugvorrichtung bereitgestellt, welche einen geringeren Zugkraftaufwand und damit verbunden eine signifikante Kraftstoffeinsparung gewährleistet. Zusätzlich bestehen weitere Vorteile darin, dass eine verbesserte, ökologisch-landwirtschaftliche Bodenbearbeitung möglich ist, weil der Boden besser gelockert und durchlüftet werden kann und somit besser mit Sauerstoff im Sinne eines CO₂-Austausches versorgt werden kann. Hinzu kommt, dass eine schädliche Pflugsohlenbildung vermieden werden und die Anzahl der Bearbeitungsgänge bis zur Saatbeet-Bereitung verringert werden kann. Die vorliegende Erfindung geht von der grundsätzlichen Überlegung aus, dass bei einem herkömmlichen Pflug die Pflugschar sozusagen waagerecht sich durch den Boden scharrt und mit Hilfe eines Scheibensechs und einer Streichblechkante ein Erdbalken senkrecht aus dem Boden herausgeschnitten wird. Aufgrund der Krümmung der Pflugschar wird der die Furche bildende Erdbalken anschließend zu einem angrenzenden Streichblech weitergeleitet, welches den Balken aufnimmt, ihn in einer schraubenartigen Form verwindet und ihn anschließend zur Seite hin bei einem Wendewinkel von ca. 130° ablegt. Wegen der relativ hohen Reibungskräfte sind auch die Zugkräfte beim Pflügen relativ groß. Um diese Nachteile herkömmlicher Pflüge mit starrem Pflugkörper mit starken Komponenten zu überwinden, setzt die vorliegende Erfindung an, indem neuartige, rotierbare Maschinenelemente eingesetzt werden, welche das eigentliche Pflügen durchführen. Grundsätzlich wirken sich rotierende Schneidelemente auf den Zugkraftaufwand positiv aus. Gemäß der Erfindung ist nun erreicht worden, dass lediglich zwei Schneidwerkzeuge, welche synergistisch zusammenwirken, den eigentlichen Pflugaufbau repräsentieren, wobei bereits aus der Tatsache, dass es sich um rotierende Schneidelemente handelt, der Zugkraftaufwand beim Ziehen des Pfluges durch den Boden erheblich reduziert ist gegenüber starren Pflugelementen.

Gemäß einem ersten Aspekt der vorliegenden Erfindung wird eine Pflugvorrichtung zum Pflügen eines Bodens beschrieben. Die Pflugvorrichtung weist eine Trägerstruktur, ein rotierbares Schneidelement (z.B. eine gezackte Scheibe) und ein zweites Schneidelement (z.B. eine weitere, zum ersten Schneidelement abgewinkelte gezackte Scheibe) auf. Das rotierbare erste Schneidelement weist eine umlaufende erste Schneidkante auf, wobei das erste Schneidelement an der Trägerstruktur angeordnet ist und derart ausgebildet ist, dass bei Bewegen der Trägerstruktur auf dem Boden entlang einer Pflügrichtung (d.h. der Bearbeitungsrichtung) ein Seitenbereich eines Erdbalkens des Bodens (insbesondere von einer Furchenwand des Bodens) mittels eines ersten Schneidbereichs der ersten Schneidkante abschneidbar ist. Das zweite Schneidelement weist eine zweite Schneidkante auf, wobei das zweite Schneidelement an der Trägerstruktur angeordnet ist und derart ausgebildet ist, dass bei Bewegen der Trägerstruktur auf dem Boden entlang der Pflügrichtung ein Bodenbereich eines Erdbalkens des Bodens (insbesondere entlang einer Trennfläche zwischen Erdbalken und Pflügsohle) mittels eines zweiten Schneidbereichs der zweiten Schneidkante abschneidbar ist. Das zweite Schneidelement ist relativ zu dem ersten Schneidelement in Pflügrichtung derart angeordnet, dass der zweite Schneidbereich in Pflügrichtung vor dem ersten Schneidbereichs angeordnet ist.

Der neuartige, erfindungsgemäße Pflug weist also zwei scheibenförmige bzw. tellerartige Schneidwerkzeuge auf. Ein Schneidwerkzeug ist dabei so ausgebildet, dass es die Seitenkanten eines Erdbalkens vom durchgängigen Boden mittels eines Schnittes zerteilt, wohingegen das zweite Schneidelement im Bereich der Furchensohle den Erdbalken in der Pflugtiefe vom durchgängigen Erdreich abtrennt. Vorzugsweise ist das für eine im Wesentlichen vertikale Schnittebene vorgesehene erste Schneidelement als Hohlscheibe ausgebildet, und zwar ähnlich den Scheibensechen, wobei die Hohlscheibe als rotierbares, im Wesentlichen vertikal angeordnetes Schneidelement eine umlaufende Schneidkante aufweist. Vorzugsweise ist die umlaufende Schneidkante bombiert und schneidet also den im Bereich der Furchensohle horizontal vorgeschnittenen, im Furchensohlenbereich vom umgepflügten Mutterboden gelösten Erdbalken vertikal ab und lässt den abgeschnitten Erdbalken durch den konkaven hohlen Bereich der Hohlscheibe hindurch und von der Hohlscheibe in gewendeter Form zurück in die Furche abgleiten. Dabei weist die Hohlscheibe verschiedene Vertiefungen und Erhebungen in Form von unterschiedlichen Radien auf wie beispielsweise sogenannte Korbbögen, innere plane Flächen gefolgt von unterschiedlichen Radien oder insgesamt nur ein Radius, was je nach Bodenverhältnissen entsprechend angepasst werden kann. Die Geometrie und der Durchmesser der Hohlscheibe haben wesentlichen Einfluss auf das Pflügergebnis. Indem die Hohlscheibe, d. h. eine bombierte Scheibe, vorzugsweise gezackt an der Schneidkante ausgebildet ist, wird ein besserer Eingriff in den Boden realisiert. Vorzugsweise ist die Hohlscheibe an der Trägerstruktur mittels mehrerer justierbarer Maschinenelemente so angebracht, dass der Anstellwinkel veränderbar ist. Die Schneidelemente sind vorzugsweise austauschbar an der Trägerstruktur angebracht.

Vorzugsweise ist beiden Schneidelementen ein als Schar ausgebildetes Streichblech in Pflügrichtung nachgeordnet und sind die Schneidelemente durch den Erdbalken selbst beim Pflügen in Rotation versetzbar. Sie müssen also nicht separat aktiv angetrieben werden, sondern können allein durch das Ziehen des neuartigen Pfluges durch das Erdreich in Rotation versetzt werden. Dadurch wird der Zugkraftaufwand erheblich reduziert im Vergleich zu starr angebrachten herkömmlichen Pflugscharen an der Pflugvorrichtung.

In einer beispielhaften Ausführungsform ist das erste Schneidelement und / oder das zweite Schneidelement schwenkbar und / oder translatorisch verschiebbar an der Trägerstruktur angeordnet, um den Anstellwinkel einzustellen. Somit kann abhängig von der Bodenbeschaffenheit und abhängig von der gewünschten Bearbeitungstiefe ein Anstellwinkel eingestellt werden.

Ferner wird gemäß einem weiteren Aspekt ein Verfahren zum Pflügen eines Bodens mit einer oben beschriebenen Pflugvorrichtung bereitgestellt.

Während die Pflugvorrichtung den Boden pflügt, ist es ein Ziel, ein gewünschtes Furchenbild zu erzielen. Aus dem Boden werden beim Pflügen so genannte Erdbalken herausgeschnitten. Ein Erdbalken weist einen Seitenbereich auf, entlang welchem das Schneidelement schneidet. Ferner weist der Erdbalken einen Bodenbereich auf, welcher die beiden Seitenbereiche verbindet und mittels des zweiten Schneidelements als Pflugschar von dem Boden getrennt wird. Entsprechend weist der Boden an dem Bodenbereich des Erdbalkens eine Trennfläche auf (sog. Furchensohle). Aus dem Boden wird somit ein ungefähr rechteckiger Erdbalken herausgeschnitten, wobei eine horizontale Schnittebene (=Furchensohle) mittels des zweiten Schneidelements und vertikale Schnittebene (=Furchenwand) mittels des ersten Schneidelements an dem Restboden entsteht. Durch das zangenartige Herausschneiden des Erdbalkens wird im Boden eine Furchenwand gebildet, von welcher der Seitenbereich des Erdbalkens gelöst wurde. Der Bodenbereich definiert somit zum Zeitpunkt des Trennens von dem Boden die horizontal unterste Fläche des Erdbalkens.

Die Pflügrichtung bzw. die Bearbeitungsrichtung ist definiert als die Richtung, entlang welcher die Pflugvorrichtung über dem Boden verfahren wird.

Die Trägerstruktur ist ausgebildet, gemeinsam zumindest das erste und das zweite Schneidelement zu befestigen. Die Trägerstruktur ist an einer Zugmaschine, wie beispielsweise einen Traktor, befestigbar, um somit entsprechend die Schneidelemente entlang der Pflügrichtung anzutreiben. Die Trägerstruktur kann ebenfalls Teil eines Trageisens bzw. einer Grindel sein. Die Trägerstruktur weist Metallbalken und / oder Faserverbundelemente auf. Ferner können, wie weiter unten im Detail beschrieben, die angebrachten Elemente justierbar an der Trägerstruktur befestigt werden.

Die Trägerstruktur bildet somit eine starre Befestigungsstruktur für die Schneidelemente. Mit anderen Worten sind die Schneidelemente an der Trägerstruktur derart fixiert, dass während des Pflügens keine Relativbewegung zwischen den Schneidelementen möglich ist. Wird somit erfindungsgemäß das zweite Schneidelement aufgrund des Schneidens des Erdbalkens in den Boden gedrückt, so wird gleichzeitig das erste Schneidelement in den Boden mittels einer Einzugskraft gedrückt.

Das erste Schneidelement ist rotierbar bzw. drehbar an der Trägerstruktur befestigt. Entsprechend bildet das erste Schneidelement eine erste Drehachse, um welche sich das erste Schneidelement dreht, aus. Das erste Schneidelement ist insbesondere als Schneidteller ausgebildet und weist eine kreisrunde Umfangslinie auf. Entlang der Umfangslinie ist die umlaufende erste Schneidkante ausgebildet. Mittels der ersten Schneidkante wird der Seitenbereich des Erdbalkens von der Furchenwand des Bodens getrennt und zugleich seitlich abgeleitet. Die umlaufende erste Schneidkante weist einen ersten Schneidbereich auf. Der erste Schneidbereich ist derjenige Umfangsabschnitt der ersten Schneidkante, welcher in Pflügrichtung als zweites in Kontakt mit dem Boden kommt und diesen schneidet. Das erste Schneidelement kann einen Durchmesser von ungefähr 500 mm bis ungefähr 800 mm aufweisen. Ferner kann das erste Schneidelement eine Zahnung aufweisen (bessere Eindringtiefe)und zentral gelagert und verstellbar sein.

Das erste Schneidelement wird rotiert, wenn sich die Pflugvorrichtung entlang des Bodens bewegt. Hierbei bewirken Reibungskräfte, dass das erste Schneidelement bewegt wird. Das erste Schneidelement ist dabei derart dimensioniert, dass während des Pflügens insbesondere nur die untere Hälfte des erste Schneidelements, welche sich unter der ersten Drehachse befindet, in den Boden eindringt, so dass Reibkräfte mit dem Boden die Rotation induzieren.

Die Rotation des ersten Schneidelements bewirkt ferner, dass der abgetrennte Erdbalken angehoben und zugleich zur Seite abgeleitet wird. Der abgetrennte Erdbalken ist insbesondere in Reibkontakt mit einer ersten Schneidfläche des ersten Schneidelements. Die erste Schneidfläche ist diejenige Fläche des ersten Schneidelements, welche innerhalb der ersten Schneidkante ausgebildet ist. Ferner ist die erste Schneidfläche diejenige Fläche, welche zu dem abgetrennten Erdbalken gerichtet ist. Die erste Schneidfläche kann homogen ohne Aussparungen oder Erhebungen ausgebildet sein. Ferner kann die erste Schneidfläche (d.h. die Mantelfläche des ersten Schneidelements) eine Kegelform bzw. eine Kegelstumpfform ausbilden. In einer weiteren Ausführungsform kann die erste Schneidfläche der rotierenden Einheit (Schneidelement) als bombierte Scheibe ausgestaltet sein.

Aufgrund des Anhebens des Erdbalkens mittels des rotierenden ersten Schneidelements kann der Erdbalken energieeffizient an nachfolgende Elemente, welche in Pflügrichtung hinter dem Schneidelement angeordnet sind, befördert werden. Beispielsweise kann in Pflügrichtung hinter dem Schneidelement das unten beschriebene Streichblech angeordnet sein.

Das zweite Schneidelement ist z.B. rotierbar bzw. drehbar als rotierende Scheibe oder als Schneidmesser mit translatorisch sich erstreckender Schneidkante an der Trägerstruktur befestigt. Mittels der zweiten Schneidkante wird der Bodenbereich des Erdbalkens von der Furchensohle des Bodens getrennt, unterschnitten und ggf. zugleich angehoben. Die umlaufende zweite Schneidkante weist einen zweiten Schneidbereich auf. Der zweite Schneidbereich ist derjenige Umfangsabschnitt der zweite Schneidkante, welcher in Pflügrichtung als erstes in Kontakt mit dem Boden kommt und diesen schneidet.

Gemäß einer beispielhaften Ausführungsform sind der erste Schneidbereich innerhalb einer ersten Schneidebene und der zweite Schneidbereich in einer zweiten Schneidebene ausgebildet, wobei die erste Schneidebene und die zweite Schneidebene zueinander einen Winkel von insbesondere 30° bis 135°, insbesondere 45° bis 110° Grad, ausbilden.

Die erste Schneidkante läuft dabei in einer ersten Schneidebene, während die zweite Schneidkante in einer zweiten Schneidebene verläuft. Das erste Schneidelement und das zweite Schneidelement sind dabei derart relativ zueinander an der Trägerstruktur befestigt, dass die erste Schneidebene und die zweite Schneidebene dabei nicht parallel ausgebildet sind und einen Winkel von insbesondere mehr oder weniger als 90° (Öffnungswinkel) zueinander aufweisen. Mit anderen Worten kann in einer weiteren beispielhaften Ausführungsform das erste Schneidelement derart angeordnet sein, dass zwischen der Drehachse des ersten Schneidelements und einer Erstreckungsrichtung der zweiten Schneidkante (bzw. eine Tangente an dem zweiten Schneidbereich, falls das zweite Schneidelement eine rotierende Scheibe ausbildet) ein Winkel von ungefähr 0° bis ungefähr ±30° Grad vorliegt. Insbesondere weist die Normale der ersten Schneidebene eine (Richtungs-) Komponente auf, welche parallel zu einer Horizontalrichtung ist, wenn die Pflugvorrichtung bestimmungsgemäß auf dem Boden aufliegt. Die Drehachse des Schneidelements ist insbesondere parallel zu der Normalen der ersten Schneidebene. Ferner weist die Normale der zweiten Schneidebene eine weitere (Richtungs-) Komponente auf, welche parallel zu einer Vertikalrichtung ist, wenn die Pflugvorrichtung bestimmungsgemäß auf dem Boden aufliegt. Ein Winkel zwischen den Normalen kann zwischen 45° Grad und 130° Grad beispielsweise ausgewählt werden, um ein gewünschtes Furchenbild im Boden zu erzielen.

Wenn die erste Schneidebene und die zweite Schneidebene insbesondere ca. 90° zueinander aufweisen, so drückt das zweite Schneidelement den unterschnittenen Erdbalken in Richtung des ersten Schneidelementes. Dies führt dazu, dass während der Bewegung in Pflügrichtung der Erdbalken zwischen dem ersten Schneidelement und dem zweiten Schneidelement vorteilhaft bearbeitet werden kann. Durch das Zusammenwirken beider rotierenden Maschinenelemente, d.h. dem ersten und zweiten Schneidelement wird ein bevorzugtes Pflügergebnis bzw. "Krümelung" (Schollenzerkleinerung) bereitgestellt. Außerden wird der starke Seitenzug des ersten Schneideelements, der sich negativ auf die Schlepperzuglinie auswirkt, durch die Gegenwirkung des zweiten Schneideelements weitgehend kompensiert. Die Zugmschine bleibt somit ohne großes Gegensteuern in der Spur.

Das erste Schneidelement (z.B. die bombierte Scheibe) schneidet den Erdbalken auf einer ersten Schichtebene (Bearbeitungstiefe ca. 15-35 cm von der Bodenoberfläche ausgehend) ab und leitet den Erdbalken auf ein opionales Streichblechelement (d.h. dem Leitblech) weiter. Das Streichblechelement bzw. das Leitblech kann auch als rotierbarer Förderteller ausgebildet sein.

In der zweiten Schichtebene (Bearbeitungstiefe ca. 15 bis 30 cm von der Bodenoberfläche ausgehend) wird der Erdbalken durch das zweite Schneidelement horizontal (d.h. von der Furchensohle) geschnitten.

Der Abstand der beiden Schneidebenen (oben: rotierendes erste vertikale Schneidelement; unten: zweites horizontales Schneideelement), kann durch eine Verstellmöglichkeit des rotierenden Schneidelements angepasst werden.

Der Pflugkörper z.B. bestehend aus den Hauptkomponenten Schneidelemente, Leitblech und dem Streichblech entspricht z.B. einer schiefen, gewundenen Ebene, die durch den Boden gezogen wird. Der vom Schar und der senkrechten Streichblechkante abgetrennte Erdbalken schiebt sich entlang des Leitblechs auf das Streichblech an dessen schiefen, gewundenen Ebene hoch und zur Seite. Dieser Vorgang beinhaltet eine Stauchung der oberen sowie eine Dehnung der unteren Hälfte des Erdbalkens. Innerhalb des Erdbalkens entstehen als Folge Druck-, Zug- und Drehspannungen, die die Zerteilung des Bodens bewirken.

Mit der erfindungsgemäßen Anordnung des zweiten Schneidelements in Pflügrichtung vor dem ersten Schneidelement kann die Reibkraft, welche zu einer hohen benötigten Zugkraft der Pflugvorrichtung führt, reduziert werden. Da der Erdbalken, wenn er von dem ersten Schneidelement geschnitten wird, bereits durch das zweite Schneidelement von der Furchensohle unterschnitten getrennt ist, wird der Erdbalken von dem ersten Schneidelement bereits angehoben und gewendet. Der zweite Schneidbereich liegt in Pflügrichtung beispielsweise zwischen 1 cm und 50 cm, insbesondere 15 cm bis 25 cm, vor dem ersten Schneidbereich. Die (insbesondere horizontale) zweite Schneidscheibe (bzw. Schneidelement) kommt als erstes in Kontakt mit dem Boden und läuft sozusagen voraus gegenüber der (insbesondere vertikalen) ersten Schneidscheibe (bzw. Schneidelement).

Gemäß der vorliegenden Erfindung wird das Ziel erreicht, die herkömmlichen starren Pflugkörper-Komponenten weitestgehend durch neuartige, rotierbare Maschinenelemente zu ersetzen. Die erfindungsgemäßen rotierenden Schneidelemente wirken vorteilhaft auf die Schnitt- und Hubarbeit und somit auf die Leichtzügigkeit eines Pfluges aus.

Für den horizontalen Erdbalkenschnitt wird in einer oben beschriebenen beispielhaften Ausführungsform ein scheibenförmiges, sich an der Furchenwand abwälzendes zweites Schneidelement zum Einsatz kommen. Dieses "unter-schneidet" die Furchenwand bzw. den zu pflügenden Erdbalken horizontal und erleichtert damit die Schieferung / Furchenräumung wesentlich.

In einer oben beschriebenen beispielhaften Ausführungsform kommt ferner ein rotierbares vertikal angeordnetes erstes Schneidelement (bombierte Scheibe) zum Einsatz und wird mit dem oben beschriebenen, rotierbaren, horizontal angeordneten zweiten Schneidelement kombiniert.

Das vertikal angeordnete bombierte erste Schneidelement schneidet dann den zuvor bereits mittels des vorgelagerten zweiten Schneidelement horizontal vorgeschnittenen Erdbalken vertikal ab und wendet ihn durch die Rotationsbewegung der Hohlscheibe zugleich.

Mit diesem Konzept wird ein leichtzügiger, kraftstoffsparender Pflug bereitgestellt, der zugleich ein nahezu saatbeetfertiges konstantes Furchenbild erzeugt.

Gemäß einer beispielhaften Ausführungsform sind/ist das erste und / oder das zweite Schneidelement schwenkbar, beispielsweise mittels eines Gelenks, an der Trägerstruktur befestigt, sodass der Winkel zwischen der Drehachse und der Erstreckungsrichtung der zweiten Schneidkante eingestellt und in einer gewünschten Position fixiert werden kann.

Vorzugsweise ist das erste Schneidelement hohltellerartig derart mit einer Krümmung seiner Innenoberfläche ausgebildet, dass beim Pflügen der seitlich vom ungepflügten Boden mittels des ersten Schneidwerkzeuges abgetrennte Erdbalken in das Hohle des Hohltellers hineingeleitet und durch die Krümmung der Innenoberfläche gewunden und nach seinem Austreten aus dem Hohlteller als gewendeter Erdbalken auf den Boden der Furche wieder ablegbar ist. Bei entsprechender Dimensionierung des Hohltellers kann erreicht werden, dass der Erdbalken nicht teilweise, sondern komplett um 180° gewendet wird. Und dies ist sogar möglich, ohne dass eine Pflugschar oder zusätzlich ein Streichblech oder Leitblech erforderlich sein müssen.

Entsprechend eines weiteren Ausführungsbeispiels ist das zweite Schneidelement bzgl. seines Anstellwinkels α mit einer Winkelverstelleinrichtung versehen, mittels welcher ein in Pflügrichtung positiver Anstellwinkel α einstellbar ist. Das bedeutet, dass das tellerartige, als Scheibe ausgebildete und im Wesentlichen waagrecht angeordnete Schneidelement, welches im Bereich der Furchensohlen den ungepflügten Boden zertrennt, in Pflügrichtung um einen positiven Winkel α so anstellbar ist, dass damit in Verbindung mit einer Selbstjustierung des zweiten Schneidelementes seine Tiefe im Boden, in welcher die Furchensohle aus dem ungepflügten Boden geschnitten wird, während des Pflügens im Wesentlichen selbsttätig beibehalten wird. Vorzugsweise ist die Winkelverstelleinrichtung bzgl. des Anstellwinkels des zweiten scheibenartigen Schneidelementes mechanisch oder hydraulisch oder elektrisch einstellbar. Der Anstellwinkel ist dabei von der Pflüggeschwindigkeit, der Bodenbeschaffenheit, dem Feuchtegehalt des Bodens und anderen Faktoren abhängig.

Vorzugsweise ist zusätzlich eine Feder vorgesehen, welche eine erforderliche Einzugskraft beim Bewegen des zweiten Schneidelementes entlang der Furchensohle sichert und eine solche Größe bzw. Federkraft aufweist, dass das zweite Schneidelement unter dem Gewicht des Erdbalkens sich im Wesentlichen waagerecht ausrichtet. Die Feder ist dabei so bemessen, dass entsprechend der eingestellten Tiefe ein bestimmtes Gewicht des Erdbalkens dafür sorgt, dass das zweite Schneidelement in eine im Wesentlichen waagerechte Richtung gedrückt wird, bei sich verringertem Gewicht des Erdbalkens der Anstellwinkel sich aber vergrößert und gegebenenfalls aber dadurch bei weiterer Zugkraftanwendung auf den erfindungsgemäßen Pflug die im Wesentlichen waagerecht im Bereich der Furchensohle schneidende zweite Schneidvorrichtung aus dem zu pflügenden Boden austaucht. Das Schneiden des horizontalen Schnittes im Bereich der Furchensohle mittels des zweiten Schneidelementes wird auch als Unterschneidung bezeichnet. Dabei wälzt sich das Schneidelement mit seiner umlaufenden Schneidkante entlang der Furchensohle und trennt den Erdbalken im Furchensohlenbereich vom ungepflügten Boden. Die Kombination des eingestellten Anstellwinkels in Verbindung mit der Federkraft kann im Sinne einer mechanischen oder einer hydraulischen Verstellung als Tiefen-Einzugsregelung kombiniert sein und erfüllt damit zwei wesentliche Funktion: Zum einen erfolgt eine horizontale Trennung des Erdbalkens vom ungepflügten Boden. Zum anderen wird die Einzugskraft erzeugt bzw. geregelt und der Pflug geführt. Durch eben die je nach herrschenden Bedingungen variierbarer Anstellung des Schneidtellers in Zugrichtung kann zugleich die Einzugskraft des Pfluges reguliert werden. Der wesentliche Vorteil des erfindungsgemäßen Pfluges besteht darin, mit der neuartigen Vorrichtung Kraft zu sparen und ökologisch und bodenphysikalisch bzw. pflanzenbaulich vorteilhaft den Ackerboden bzw. die Wiese zu bearbeiten.

Gemäß einer Weiterbildung der Erfindung ist das zweite Schneidelement mit einer in einem Rohr angeordneten innenliegenden Lagerung in der Art einer Trommellagerung versehen. Das Anordnen der Lagerung des zweiten Schneidelementes in einer Trommel bzw. in einem Rohr sichert einen Schmutzzutritt zu der Lagerung und damit eine zuverlässige Funktionsweise des zweiten Schneidelementes und verringert außerdem den Widerstand beim Ziehen der Pflugvorrichtung durch den zu pflügenden Boden.

Vorzugsweise ist das zweite Schneidelement als Speichenrad ausgebildet und bzw. oder weist eine sich verjüngende Schneidkante mit einer Hinterschneidung im Speichenbereich auf. Die Ausbildung des zweiten Schneidelementes als Speichenrad hat gegenüber einem aus Vollmaterial vorgesehenen Rad den Vorteil, dass zum einen der neuartige Pflug kostengünstiger, weil weniger materialintensiv, hergestellt werden kann. Darüber hinaus ergibt sich der Vorteil, dass überall, wo Leerräume zwischen den Speichen sind, ein Festbacken oder Anhaften von Erde nicht auftreten kann.

Um eine Langlebigkeit des erfindungsgemäßen Pfluges sichern zu können, ist es des Weiteren vorzugsweise vorgesehen, dass das zweite Schneidelement aus einem Verbundwerkstoff besteht, wobei insbesondere die der Furchensohle zugewandte untere Seite des zweiten Schneidelementes sowie die Schneide aus Stahl bestehen und die dem Erdbalken zugewandte Oberseite einen verschleißfesten und haftverminderten Kunststoff aufweist. Dadurch kann das zweite Schneidwerkzeug leichter und damit auch letztendlich der Zugkraftaufwand für das Pflügen reduziert werden. Außerdem besteht der Vorteil, wenn haftvermindernder Kunststoff verwendet wird, dass Teile des Erdbalkens am zweiten Schneidelement nicht mehr oder nur unwesentlich noch haften bleiben können.

Gemäß einem weiteren Ausführungsbeispiel ist das zweite Schneidelement zweiteilig ausgebildet und weist einen rotierenden Schneidenring auf, welcher über ein Lager gegenüber einem feststehenden Innenrad abgestützt ist. Das bedeutet, dass ein Trägerkörper in Form eines Rades fest mit dem Träger des erfindungsgemäßen Pfluges verbunden ist und nur noch die Schneide in Form eines Außenkranzes um den feststehenden Teil des tellerartig ausgebildeten zweiten Schneidelements rotiert. Weiter vorzugsweise ist die Schneide aktiv angetrieben. Vor allen Dingen, wenn das zweite Schneidelement eine bombierte Scheibe ist, sind die Kräfte, welche beim Pflügen auf die Schneidelemente wirken, so groß, dass ohne aktiven Antrieb die rotierende Schneide allein durch das Aufbringen der Zugkraft auf den Pflug durch den Boden die Scheibe rotiert.

Eine Vorrichtung wie z.B. das oben beschriebene Gelenk dient zum Verstellen des Schneidelementwinkels (Teller-Scheibenwinkel) und ermöglicht die Einstellung des Schneidelement-Neigungswinkels (Vertikalneigung zur Furchenwand des Bodens) und des Schneidelement-Richtungswinkels (zur Pflügrichtung, d.h. zur Schlepperfahrrichtung). Die Schneidelinie des Schneidelements zwischen der ersten Schneidkante und der Furchenwand kann wie oben beschrieben mittels einer verstellbaren Stütze höhenverstellt werden. Entsprechend kann der vertikale Abstand zwischen dem ersten Schneidelement und dem zweiten Schneidelement variabel eingestellt werden. Mit anderen Worten können in einer weiteren beispielhaften Ausführungsform das erste Schneidelement und das zweite Schneidelement derart zueinander angeordnet sein, dass der Schneidbereich der ersten Schneidkante des ersten Schneidelements von der zweiten Schneidkante des zweiten Schneidelement vertikal beabstandet ist.

Gemäß einer weiteren beispielhaften Ausführungsform ist das zweite Schneidelement ein rotierbares Schneidelement und die zweite Schneidkante eine das zweite Schneidelement umlaufende Schneidkante. Das zweite Schneidelement kann dabei mittels einer Antriebsvorrichtung angetrieben bzw. rotiert werden. Alternativ kann das zweite Schneidelement ein Schneidmesser sein.

Gemäß einer weiteren beispielhaften Ausführungsform weist das erste und / oder zweite Schneidelement eine Kegelform oder eine Kegelstumpfform auf. Beispielsweise weist das erste und / oder zweite Schneidelement an seiner Drehachse einen Befestigungsbereich auf, welcher in einer Befestigungsebene ausgebildet ist. Die umlaufende erste Schneidkante verläuft innerhalb einer ersten bzw. zweiten Schneidebene, wobei die Befestigungsebene von der ersten bzw. zweiten Schneidebene entlang der entsprechenden Drehachse beabstandet ist. Zwischen der umlaufenden ersten bzw. zweiten Schneidkante und dem Befestigungsbereich ist die Schneidfläche des ersten bzw. zweiten Schneidelements ausgebildet.

Gemäß einer weiteren beispielhaften Ausführungsform ist die erste bzw. zweite Schneidkante des ersten bzw. zweiten Schneidelements bombiert verzahnt (und z.B. als konkave Scheibe) ausgebildet. Eine bombierte Ausführung bedeutet, dass in der ersten bzw. zweiten Schneidkante Vertiefungen oder Erhebungen (Verzahnung) ausgebildet sind. Damit kann eine verbesserte Schneidwirkung des ersten bzw. zweiten Schneidelements beim Abtrennen des Erdbalkens erzielt werden. Mittels der kugelförmigen Ausbildung insbesondere des ersten Schneidelementes kann der an ihr entlanggleitende Erdbalken eine Wendung erfahren, sodass die Anbringung eines Streichbleches bzw. Leitbleches unnötig sein kann.

Gemäß einer weiteren beispielhaften Ausführungsform weist die Pflugvorrichtung ein Streichblech auf, welches entlang der Pflügrichtung hinter dem ersten Schneidbereich des ersten Schneidelements an der Trägerstruktur angeordnet ist. Das Streichblech weist eine Förderfläche auf, entlang welcher der Erdbalken nach Abtrennung von dem Boden förderbar ist. Das Streichblech kann identisch mit dem Leitblech sein und integral mit diesem ausgebildet sein. Die Förderfläche ist derart gewölbt bzw. schraubenförmig ausgebildet, dass bei Entlangstreichen des Erdbalkens entlang der Förderfläche der Erdbalken wendbar ist.

Aufgrund der Rotation des ersten Schneidelements wird der abgetrennte Erdbalken leicht angehoben und auf die Förderfläche des Streichblechs abgegeben. Bei Bewegung der Pflugvorrichtung entlang der Pflügrichtung werden die Erdbalken entlang dem Streichblech und entsprechend entgegen der Pflügrichtung verschoben. Das Streichblech weist eine gebogene, schraubenförmige Verwindung auf, wobei die Schraubenachse beispielsweise eine Komponente aufweist, die parallel zur Pflügrichtung ist. Somit wird die Funktion erzielt, dass die abgetrennten Erdbalken gewendet werden. Mit anderen Worten nimmt das Streichblech den Erdbalken auf, hebt ihn aufgrund seiner gebogenen Form zunächst an und legt ihn anschließend zur Seite hin ab. Diesen Vorgang bezeichnet man auch als 'Wenden'. Der Wendewinkel beträgt ca. 130 Grad. Das Streichblech kann intergral und einstückig mit dem Leitblech ausgebildet sein.

Gemäß einer weiteren beispielhaften Ausführungsform weist das Streichblech einen Aufnahmebereich zur Aufnahme des ersten Schneidelements auf, wobei das erste Schneidelement derart in dem Streichblech aufgenommen ist, dass der erste Schneidbereich der ersten Schneidkante in Pflügrichtung von dem Streichblech hervorragt. Beispielsweise kann das erste Schneidelement derart relativ zum Streichblech angeordnet sein, dass ein Bereich des ersten Schneidelements mit dem Streichblech überlappt, insbesondere in Richtung Drehachse des ersten Schneidelements gesehen überlappt, wobei lediglich der erste Schneidbereich von dem Streichblech in Richtung Pflügrichtung hervorragt.

Der Aufnahmebereich des Streichblechs kann ferner eine Vertiefung aufweisen, welche an die Dimension bzw. an das Profil des ersten Schneidelements angepasst ist. Insbesondere kann der Aufnahmebereich des Streichblechs eine Aussparung aufweisen, wobei die Aussparung einen bogenförmigen Verlauf aufweist, welcher korrespondierend zu dem Umfangsverlauf der umlaufenden ersten Schnittkante des ersten Schneidelements ausgebildet ist.

Gemäß einer weiteren beispielhaften Ausführungsform ist die Trägerstruktur derart ausgebildet, dass das erste Schneidelement und / oder das zweite Schneidelement entlang der Pflügrichtung relativ zu dem Streichblech einstellbar ist. Beispielsweise können das erste Schneidelement und das zweite Schneidelement mittels Bolzenverbindungen, welche in Langlöchern der Trägerstruktur eingreifen können, an der Trägerstruktur verschiebbar befestigt werden. Mittels der Einstellung der Abstände des ersten Schneidelements, des zweiten Schneidelements und der Trägerstruktur entlang der Pflügrichtung kann die Pflugvorrichtung auf spezielle Bedingungen verschiedener Bodenarten eingestellt werden und effizienzoptimiert werden.

Gemäß einer weiteren beispielhaften Ausführungsform ist die Trägerstruktur derart ausgebildet ist, dass das erste Schneidelement entlang einer Richtungskomponente der Drehachse relativ zu dem Streichblech einstellbar ist. Somit kann beispielsweise ein Abstand zwischen dem ersten Schneidelement und dem Streichblech nachjustiert werden bzw. an gewünschte Bodenbedingungen eingestellt werden.

Gemäß einer weiteren beispielhaften Ausführungsform ist die Trägerstruktur derart ausgebildet, dass ein Abstand zwischen dem ersten Schneidbereich der ersten Schneidkante des ersten Schneidelements und der zweiten Schneidkante des zweiten Schneidelement einstellbar ist.

Die Pflugvorrichtung ermöglicht somit einen leichtzügigen Vorpflüge-Effekt. Der Reibungskoeffizient gegenüber herkömmlichen starren Pflugkörpern wird dadurch erheblich herabgesetzt.

Mittels der beschriebenen Pflugvorrichtung wird eine Zugkraft- / Kraftstoffersparnis durch Leichtzügigkeit der Pflugvorrichtung ermöglicht. Ferner ist die Pflugvorrichtung universell einsetzbar und funktioniert nahezu bei allen Bodenverhältnissen. Ferner wird durch die Rotationsbewegung des Schneidtellers der Erdbalken kontinuierlich gebrochen. Dadurch wird die gewünschte Krümelung der Scholle (Schollenzerkleinerung) erreicht. Durch die Schollenverkleinerungs-Effekt können die Nachbearbeitungsgänge reduziert werden, (spart Arbeitsgänge bis zur Saatbeet Bearbeitung). Außerdem mit der Boden vorteilhaft durchmischt. Ferner sind konventionelle Standardkomponenten bzw. Standardzusatzwerkzeuge, wie Düngereinleger und Scheibensech, nicht länger notwendig. Durch das rotierende erste und / oder zweite Schneidelement entsteht weniger Verschleiß und entstehen somit weniger Ersatzteilkosten.

Gemäß einer weiteren beispielhaften Ausführungsform weist die Pflugvorrichtung ein weiteres rotierbares erstes Schneidelement mit einer umlaufenden weiteren ersten Schneidkante auf, wobei das weitere erste Schneidelement an der Trägerstruktur in einer Richtung orthogonal zu der Pflügrichtung beabstandet neben dem erste Schneidelement angeordnet ist und derart ausgebildet ist, dass bei Bewegen der Trägerstruktur auf dem Boden entlang der Pflügrichtung ein weiterer Seitenbereich eines weiteren Erdbalkens von dem Boden mittels eines weiteren ersten Schneidbereichs der ersten weiteren Schneidkante abschneidbar ist und das weitere erste Schneidelement rotierbar ist, so dass der weitere Erdbalken mittels des weiteren ersten Schneidelements anhebbar ist.

Mit der oben beschriebenen Ausführungsform wird verdeutlicht, dass eine Vielzahl von ersten Schneidelementen in Pflügrichtung nebeneinander, d.h. entlang einer Richtung orthogonal (in einer Horizontalebene) zu der Pflügrichtung, beabstandet und nebeneinander angeordnet werden können. Somit können eine Vielzahl von in Pflügrichtung nebeneinander angeordneten Erdbalken mittels der ersten Schneidelemente aus dem Boden geschnitten, angehoben und gegebenenfalls gewendet werden. In einer bevorzugten Ausführungsform können auch entsprechende weitere zweite Schneidelemente den entsprechenden weiteren ersten Schneidelementen vorgelagert werden.

In einer beispielhaften Ausführungsform sind das erste Schneidelement und das zweite Schneidelement austauschbar (z.B. mittels Schraubverbindungen) an der Trägerstruktur angeordnet. Beispielsweise kann das zweite Schneidelement als horizontale Schneidescheibe an eine Trägerstruktur (beispielsweise einer Pflugschar) nachgerüstet werden.

Gemäß einem zweiten Aspekt der Erfindung wird ein Verfahren zum Pflügen eines Bodens bereitgestellt, das folgende Verfahrensschritte aufweist. Eine Trägerstruktur wird auf dem Boden entlang einer durchzuführenden Pflügrichtung bewegt, woran sich ein Abschneiden eines Seitenbereiches eines Erdbalkens des Bodens anschließt, wofür ein erster Schneidbereich einer ersten Schneidkante eines ersten Schneidelementes vorgesehen ist, welcher an der Trägerstruktur angeordnet ist. Außerdem erfolgt ein Abschneiden eines Bodenbereichs eines Erdbalkens des Bodens mittels eines zweiten Schneidbereiches einer zweiten Schneidkante eines zweiten Schneidelements, welches ebenfalls an der Trägerstruktur angeordnet ist. In Pflügrichtung läuft das zweite Schneidelement mit seinem zweiten Schneidbereich zu dem ersten Schneidbereich des ersten Schneidelements vor.

Vorzugsweise wird ein in Pflügrichtung definierter Anstellwinkel α des zweiten Schneidelements mechanisch oder hydraulisch oder elektrisch verstellt. Damit ist es möglich, die Zugkraftbedingungen und Pflügergebnisse unter Beachtung unterschiedlicher Bodenqualitäten und Einsatzbedingungen zu variieren.

Es wird darauf hingewiesen, dass zum einfacheren Verständnis die Begriffe "horizontal" und "vertikal" sowie "oben" und "unten" sich auf Anordnungen und Ausbildungen der Pflugvorrichtungen beziehen, wobei die Pflugvorrichtung bestimmungsgemäß auf dem Boden aufliegend und im Pflügbetrieb entlang der Bearbeitungsrichtung bewegbar betrachtet wird.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
- Fig. 1: eine schematische Darstellung einer Pflugvorrichtung gemäß einer beispielhaften Ausführungsform der vorliegenden Erfindung;
- Fig. 2: eine schematische Darstellung einer Pflugvorrichtung gemäß einer beispielhaften Ausführungsform der vorliegenden Erfindung während eines Pflügvorgangs;
- Fig. 3: eine schematische Darstellung einer Pflugvorrichtung gemäß einer weiteren beispielhaften Ausführungsform der vorliegenden Erfindung, in welcher ein Schneidelement überlappend an einem Streichblech angeordnet ist;
- Fig. 4: eine schematische Darstellung eines bombierten Schneidelements einer weiteren beispielhaften Ausführungsform der vorliegenden Erfindung;
- Fig. 5: zeigt in prinzipieller Art eine Doppelpflugeinrichtung als Mehrscharpflug mit einem ersten Schneidelement, welches dem zweiten Schneidelement räumlich nachläuft;
- Fig. 6: eine erfindungsgemäße Doppelscheibenpflugvorrichtung mit vorlaufendem zweiten Schneidelelement und nachlaufendem ersten Schneidelement in Form eines bombierten Hohlrades mit jeweils gezackten Scheiben;
- Fig. 7: eine Einrichtung gemäß Fig. 6 in schräg hintereinander angeordneter Dreifachanordnung als Beetpflugeinrichtung in Form eines Dreischarpfluges;
- Fig. 8: eine prinzipielle Darstellung des zweiten Schneidelementes mit einem in Pflügrichtung definierten Anstellwinkel α und einer Winkeleinstellvorrichtung;
- Fig. 9: eine prinzipielle Darstellung des zweiten Schneidelementes mit innenliegender Lagerung;
- Fig. 10: eine prinzipielle Darstellung des zweiten Schneidelementes in jeweils unterschiedlicher Ausprägung von Speichenrädern;
- Fig. 11a): eine Teilschnittansicht durch ein Schneidelement mit sich verjüngender Schneidkante und Hinterschnitten im zentralen Bereich des Schneidelementes;
- Fig. 11b): ein Schneidelement in Kompositbauweise mit einer Spitze und einem zentralen Bereich aus Stahl und einem Oberbereich aus Kunststoff;
- Fig. 12: ein zweites Schneidelement mit umlaufender Schneidkante, wobei die umlaufende Schneidkante als Schneidenring mit feststehendem Zentralbereich ausgebildet ist;
- Fig. 13: eine Teilschnittansicht mit eingezeichneter Lagerung zwischen Schneidenring und feststehendem Innenrad;
- Fig. 14: ein zweites Schneidelement in Form einer umlaufenden Kette;
- Fig. 15: ein Ausführungsbeispiel mit einer vertikalen Hohlscheibe mit zusätzlichem Leitblech;
- Fig. 16: eine als Wendepflug bzw. Drehpflug ausgebildete Pflugvorrichtung mit jeweils drei erfindungsgemäßen scheibenförmigen Schneidelementpaaren; und
- Fig. 17: ein Ausführungsbeispiel mit angetriebenem zweiten Schneidelement für zwei nachlaufende erste Schneidelemente.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch.

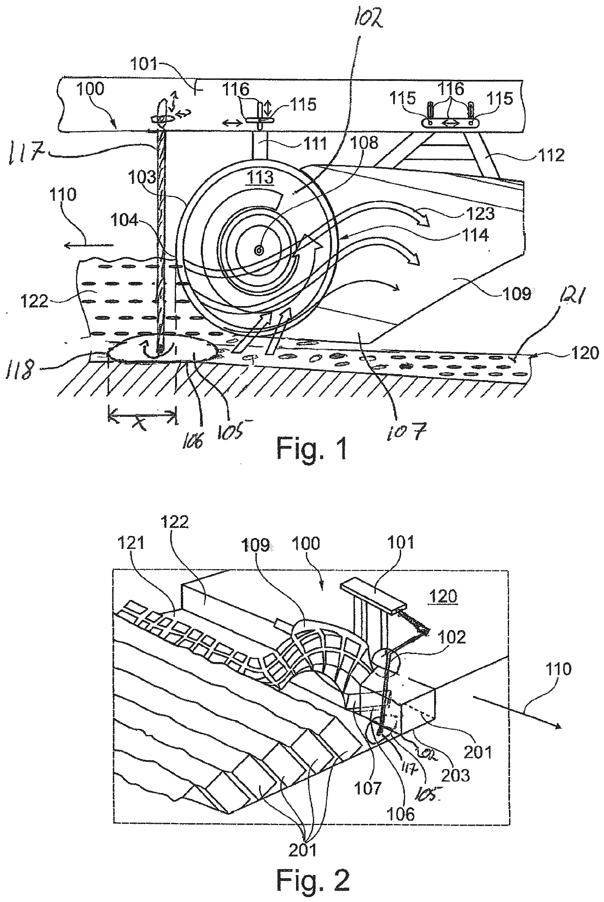

**Fig. 1** zeigt eine Pflugvorrichtung 100 zum Pflügen eines Bodens 120. Ein rotierbares erstes Schneidelement 102 mit einer umlaufenden ersten Schneidkante 103 ist an einer Trägerstruktur 101 angeordnet und derart ausgebildet, dass bei Bewegen der Trägerstruktur 101 auf dem Boden 120 entlang einer Pflügrichtung 110 ein Seitenbereich 202 eines Erdbalkens 201 des Bodens 120 mittels eines ersten Schneidbereichs 104 der ersten Schneidkante 103 abschneidbar ist. Ein zweites Schneidelement 105 mit einer zweiten Schneidkante 106 ist an der Trägerstruktur 101 angeordnet und derart ausgebildet, dass bei Bewegen der Trägerstruktur 101 auf dem Boden 120 entlang einer Pflügrichtung 110 ein Bodenbereich 203 eines Erdbalkens 201 des Bodens 120 mittels eines zweiten Schneidbereichs 118 der zweiten Schneidkante 106 abschneidbar ist, wobei das zweite Schneidelement 105 relativ zu dem ersten Schneidelement 102 in Pflügrichtung 110 derart angeordnet ist, dass der zweite Schneidbereich 118 in Pflügrichtung vor dem ersten Schneidbereichs 104 angeordnet ist. Der zweite Schneidbereich 118 ist somit von dem ersten Schneidbereich mit dem Abstand x beabstandet.

Da die Trägerstruktur 101 in Richtung Trennfläche 121 des Bodens 120 gedrückt wird, wird entsprechend auch das Schneidelement 102 in Richtung Trennfläche 121 gedrückt, so dass das Schneidelement 102 in der gewünschten Bodentiefe während des Pflügens gehalten wird.

Wie in **Fig. 2** dargestellt, werden beim Pflügen aus dem Boden 120 so genannte Erdbalken 201 herausgeschnitten. Ein Erdbalken 201 weist einen Seitenbereich 202 auf, entlang welchem das Schneidelement 102 schneidet. Ferner weist der Erdbalken 201 einen Bodenbereich 203 auf, welcher die beiden Seitenbereiche 202 verbindet und mittels des zweiten Schneidelements 105 von dem Boden 201 getrennt wird. Entsprechend weist der Boden 120 an dem Bodenbereich 203 des Erdbalkens eine Trennfläche 121, die sog. Furchensohle 121, auf. Nach Herausschneiden des Erdbalkens 201 wird in dem Boden 121 die Furchenwand 122 gebildet, von welcher der Seitenbereich 202 des Erdbalkens 201 gelöst wurde. Der Bodenbereich 203 definiert somit zum Zeitpunkt des Trennens von dem Boden 120 die vertikal unterste Fläche des Erdbalkens 201. Die Seitenbereiche 202 des Erdbalkens 201 definieren zum Zeitpunkt des Trennens von dem Boden 120 die seitlichen Wandbereiche des Erdbalkens 201.

Die Pflügrichtung 110 ist definiert als die Richtung, entlang welcher die Pflugvorrichtung 100 über dem Boden 120 verfahren wird.

Wie in Fig. 1 dargestellt ist die Trägerstruktur 101 ausgebildet, gemeinsam zumindest das erste Schneidelement 102 und das zweite Schneidelement 105 zu befestigen. Ferner ist das Streichblech 109 an der Trägerstruktur 101 befestigbar. Die Trägerstruktur 101 ist an einer Zugmaschine, wie beispielsweise einen Traktor, befestigbar, um somit entsprechend die Schneidelemente 102, 105 entlang der Pflügrichtung 110 anzutreiben. Die Trägerstruktur 101 weist beispielsweise erste und zweite Trägerelemente 111, 112 auf.

Die Trägerstruktur 101 bildet somit eine starre Befestigungsstruktur insbesondere für die Schneidelemente 102, 105. Die Schneideelemente 102, 105 sind derart an der Trägerstruktur fixiert, dass während des Pflügens keine Relativbewegung zwischen den den Positionen der Schneidelemente 102, 105 möglich ist. Wird somit erfindungsgemäß das zweite Schneidelement 105 aufgrund des Schneidens des Erdbalkens 201 in Richtung Boden 120 gedrückt, so wird gleichzeitig auch das erste Schneidelement 102 in den Boden 120 gedrückt.

Das erste Schneidelement 102 und das zweite Schneidelement 105 sind rotierbar an der Trägerstruktur 101 befestigt. Entsprechend bildet das erste Schneidelement 102 eine Drehachse 108, um welche sich das Schneidelement 102 dreht, aus. Das zweite Schneidelement 105 bildet eine zweite Drehachse 117 aus, welche sich das zweite Schneidelement 105 dreht. Das erste Schneidelement 102 und das zweite Schneidelement 105 sind insbesondere als Schneidteller ausgebildet und weisen eine kreisrunde Umfangslinie auf. Entlang der Umfangslinie ist die entsprechende umlaufende erste Schneidkante 103 und zweite Schneidkante 106 ausgebildet. Mittels der ersten Schneidkante 103 wird der Seitenbereich 202 des Erdbalkens 201 von der Furchenwand 122 des Bodens getrennt. Die umlaufende erste Schneidkante 103 weist einen Schneidbereich 104 auf. Der Schneidbereich 104 ist derjenige Umfangsabschnitt der ersten Schneidkante 103, welcher in Pflügrichtung 110 als erstes in Kontakt mit dem Boden 120 kommt und diesen schneidet. Mittels der zweiten Schneidkante 106 wird ein Bodenbereich 203 des Erdbalkens 201 von dem Boden 120 getrennt. Der zweite Schneidbereich 118 der zweiten Schneidkante 106 ist derjenige Umfangsabschnitt des zweiten Schneidelements 105, welcher in Pflügrichtung 110 als erstes Kontakt mit dem Boden 120 aufnimmt und diesen schneidet.

Das Schneidelement 102 wird rotiert, wenn sich die Pflugvorrichtung 100 entlang des Bodens 120 bewegt. Hierbei bewirken beispielsweise Reibungskräfte, dass das Schneidelement 102 bewegt wird. Das Schneidelement 102 ist dabei derart dimensioniert, dass während des Pflügens insbesondere nur die untere Hälfte des Schneidelements 102, welche sich unter der Drehachse 108 befindet, in den Boden 120 eindringt, sodass Reibkräfte mit dem Boden 120 die Rotation induzieren.

Die Rotation des ersten Schneidelements 102 bewirkt ferner, dass der abgetrennte Erdbalken 201 angehoben wird. Dies wird in Fig. 1 mit den Pfeilen, welche die Förderrichtung 123 des Erdbalkens 201 entlang der Pflugvorrichtung 100 angeben, dargestellt.

Der abgetrennte Erdbalken 201 ist insbesondere in Reibkontakt mit einer Schneidfläche 113 des Schneidelements 102. Die Schneidfläche 113 ist diejenige Fläche des Schneidelements 102, welche innerhalb der ersten Schneidkante 103 ausgebildet ist bzw. von dieser umgeben wird. Ferner ist die Schneidfläche 113 diejenige Fläche, welche zu dem abgetrennten Erdbalken 201 gerichtet ist. Die Schneidfläche 113 kann, wie in Fig. 1 dargestellt, homogen, ohne Aussparungen oder Erhebungen ausgebildet sein.

Aufgrund des Anhebens des Erdbalkens 201 mittels des rotierenden Schneidelements 102 (siehe Förderrichtung 123 Erdbalken 201) kann der Erdbalken 201 energieeffizient auf das nachfolgende Streichblech 109 befördert werden.

Insbesondere sind das erste Schneidelement 102 und das zweite Schneidelement 105 dabei derart relativ zueinander an der Trägerstruktur 101 befestigt, dass der Schneidbereich 104 des Schneidelements 102 in vertikaler Richtung beabstandet zu dem zweiten Schneidelement 105 ist bzw. über dem zweiten Schneidelement 105 liegt, wenn die Pflugvorrichtung 100 bestimmungsgemäß auf dem Boden 120 aufliegt.

Das rotierende Schneidelement 102 und das zweite Schneidelement 105 wirken synergetisch zusammen. Einerseits wird mittels des zweiten Schneidelement 105 eine gewünschte Pflugtiefe konstant gehalten, da die abgeschnittenen Erdbalken 201 mit einer Druckkraft / Einzugskraft FP auf das zweite Schneidelement 105, bzw. das Leitblech 107, drückt und somit entgegen einem Auftrieb des rotierenden Schneidelements 102 wirkt. Andererseits wird die energetisch vorteilhafte Wirkung des rotierenden Schneidelements 102 beim Schneiden der Erdbalken 201, insbesondere der Seitenflächen bzw. Seitenbereichen 202 der Erdbalken 201, ausgenutzt. Somit wird eine energieeffiziente Pflugvorrichtung 100 bereitgestellt, die außerdem bodenphysikalische Vorteile aufweist wie eine verbesserte Krümelung. Zudem bewirkt das rotierende zweite Schneidelement 105, dass der abgeschnittene Erdbalken 201 in Richtung des ersten Schneidelements 102 gedrückt wird, sodass eine Krümelung des abgeschnittenen Erdbalkens 201 vorgenommen wird. Ferner wird aufgrund einer Seitenkraft, welche mittels des vorgelagerten zweiten Schneidelementes 105 in die Trägerstruktur 101 eingetragen wird, dass einer auf das erste Schneidelement 102 während des Schneidens induzierten Seitenkraft entgegengewirkt wird, sodass eine einfachere und bessere Führung der Pflugvorrichtung 100 mit einer Zugmaschine ermöglicht wird.

Das erste Schneidelement 102 und das zweite Schneidelement 105 sind derart zueinander an der Trägerstruktur 101 angeordnet, dass der zweite Schneidbereich 118 der zweiten Schneidkante 106 des zweiten Schneidelements 105 in Pflügrichtung 110 mit einem Abstand x vor dem ersten Schneidbereich 104 der ersten Schneidkante 103 des ersten Schneidelements 102 liegt. Somit trifft zuerst während des Pflügens das rotierende zweite Schneidelement 105 den Erdbalken 201 und schneidet energieeffizient mit der zweiten Schneidkante 106 diesen vom Restboden 120 ab. Nachfolgend schneidet das erste Schneidelement 102 mit der ersten Schneidkante 103 einen Seitenbereich 202 eines Erdbalken 201. Nachfolgend trifft der Erdbalken 201 auf das Leitblech 107. Somit schneiden das erste Schneidelement 102 und das zweite Schneidelement 105 energieeffizient den Erdbalken 201 an, und sie werden gleichzeitig mit der auf das Leitblech 107 drückenden Druckkraft in der gewünschten Schneidtiefe gehalten.

Das zweite Schneidelement 105 unterschneidet mit einem Bereich (ca. halbe Kreisscheibe) den Erdbalken 201. Ein weiterer Befestigungsbereich des zweiten Schneidelements 105, an welchem eine Befestigungsstange/-welle (Drehachse 117) zur Befestigung mit der Trägerstruktur 101 angeordnet ist, wird an der von dem ersten Schneidelement abgewandten Seite an dem zweiten Schneidelement ausgebildet. Somit verläuft die Befestigungsstange/-welle während des Pflügens in einer bereits bearbeitenten Furche, was die Zugkraft der Prflugvorrichtung 100 reduziert.

Die Pflugvorrichtung 100 weist ein Streichblech 109 auf, welches entlang der Pflügrichtung 110 hinter dem ersten Schneidbereich 104 des ersten Schneidelements 102 an der Trägerstruktur 101 angeordnet ist. Das Streichblech 109 weist eine Förderfläche auf, entlang welcher der Erdbalken 201 nach Abtrennung von dem Boden 120 förderbar ist. Die Förderfläche ist derart gewölbt ausgebildet, dass beim Entlangstreichen des Erdbalkens 201 entlang der Förderfläche der Erdbalken 201 gewendet wird.

Aufgrund der Rotation des ersten Schneidelements 102 wird der abgetrennte Erdbalken 201 leicht angehoben und auf die Förderfläche des Streichblechs 109 abgegeben. Bei Bewegung der Pflugvorrichtung 100 entlang der Pflügrichtung 110 werden die Erdbalken 201 entlang dem Streichblech 109 und entsprechend entgegen der Pflügrichtung 110 verschoben. Das Streichblech 109 weist eine gebogene, schraubenförmige Verwindung auf, wobei die Schraubenachse beispielsweise eine Komponente aufweist, die parallel zur Pflügrichtung 110 ist. Somit wird die Funktion erzielt, dass die abgetrennten Erdbalken 201 gewendet werden. Mit anderen Worten nimmt das Streichblech 109 den Erdbalken auf, hebt ihn aufgrund seiner gebogenen Form zunächst an und legt ihn anschließend zur Seite hin ab. Diesen Vorgang bezeichnet man auch als 'Wenden'. Der Wendewinkel beträgt ca. 130 Grad.

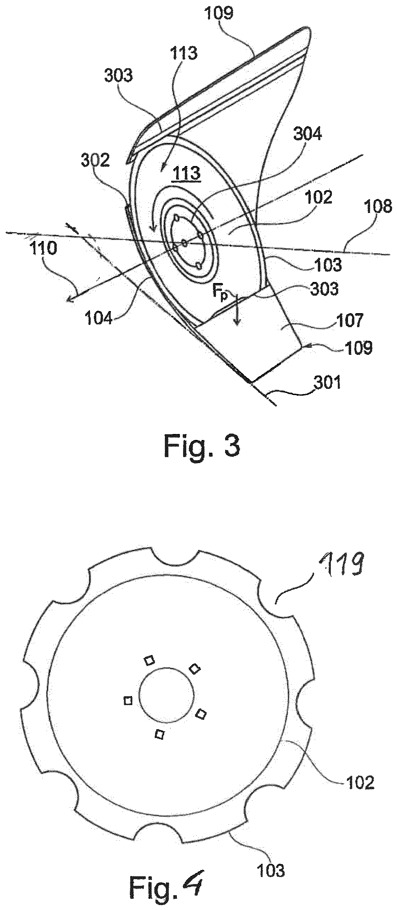

Das Streichblech 109 weist einen Aufnahmebereich 302 (siehe Fig. 3) oder eine Aussparung 114 zur Aufnahme des Schneidelements 102 auf, wobei das Schneidelement 102 derart in dem Streichblech 109 aufgenommen ist, dass der erste Schneidbereich 104 der ersten Schneidkante 103 in Pflügrichtung 110 von dem Streichblech 109 hervorragt. Die Aussparung 114 weist einen bogenförmigen Verlauf auf, welcher korrespondierend zu dem Umfangsverlauf der umlaufenden ersten Schnittkante 104 des Schneidelements 102 ausgebildet ist.

Die Trägerstruktur 100 ist derart ausgebildet, dass das erste Schneidelement 102, das Streichblech 109 und / oder das zweite Schneidelement 105 entlang der Pflügrichtung 110 und/oder senkrecht, vertikal zur Pflügrichtung 110 relativ zueinander einstellbar sind. Beispielsweise können das erste Schneidelement 102 und das Streichblech 109 mittels Bolzenverbindungen 115, welche in Langlöchern 116 der Trägerstruktur 101 eingreifen können, an der Trägerstruktur 101 verschiebbar befestigt werden. Mittels der Einstellung der Abstände des Schneidelements 102, des zweiten Schneidelementes 105, des Streichblechs 109 und der Trägerstruktur 101 entlang der Pflügrichtung 110 kann die Pflugvorrichtung 100 auf spezielle Bedingungen verschiedener Bodenarten eingestellt werden und effizienzoptimiert werden. Ferner können die Elemente nachjustiert werden, falls sich die Elemente nach Benutzung der Pflugvorrichtung 100 verziehen.

Ferner kann die Trägerstruktur 101 derart ausgebildet ist, dass das erste Schneidelement 102 entlang einer Richtungskomponente der ersten Drehachse 108 und das zweite Schneidelement 105 entlang einer Richtungskomponente der zweiten Drehachse 117 relativ zueinander einstellbar sind. Insbesondere kann ein Winkel zwischen der ersten Drehachse 108 und der zweiten Drehachse 117 eingestellt werden. Die erste Schneidkante 103 läuft in einer ersten Schneidebene, während die zweite Schneidkante 106 in einer zweiten Schneidebene verläuft. Das erste Schneidelement 102 und das zweite Schneidelement sind dabei derart relativ zueinander an der Trägerstruktur 100 befestigt, dass die erste Schneidebene und die zweite Schneidebene dabei nicht parallel ausgebildet sind und einen Winkel zueinander aufweisen.
Beispielsweise ist ein Winkel zwischen der ersten Drehachse 108 und der zweiten Drehachse 117 kleiner als 90°, insbesondere zwischen 45° und 80°.

Entsprechend kann mit der flexiblen Anbringung des Schneidelements 102, des Streichblechs 109 und / oder des zweiten Schneidelementes 105 an der Trägerstruktur 101 ein Abstand zwischen dem Schneidbereich 104 der ersten Schneidkante 103 des Schneidelements 102 und der zweiten Schneidkante 106 des zweiten Schneidelementes 105 eingestellt werden.

**Fig. 3** zeigt eine schematische Darstellung einer Pflugvorrichtung 100 gemäß einer weiteren beispielhaften Ausführungsform der vorliegenden Erfindung, in welcher das Schneidelement 102 überlappend an dem Streichblech 109 angeordnet ist.

Das erste Schneidelement 102 und / oder das zweite Schneidelement 105 kann schwenkbar, beispielsweise mittels eines Gelenks, an der Trägerstruktur 101 befestigt werden, sodass ein Winkel zwischen der ersten Drehachse 108 und der zweiten Drehachse 117 eingestellt und in einer gewünschten Position fixiert werden kann.

Das Leitblech 107 liegt in einer Leitebene. Die Normale der Leitebene weist eine (Richtungs-) Komponente auf, welche vertikal ausgerichtet ist, wenn die Pflugvorrichtung 100 bestimmungsgemäß auf dem Boden aufliegt. Somit übt ein auf dem Leitblech 107 beförderter Erdbalken 201 aufgrund seiner Schwerkraft eine Druckkraft FP in Richtung Boden 120 aus. Diese Druckkraft FP drückt die Trägerstruktur 101 und entsprechend das Schneidelement 102 in Richtung Boden 120. Die Leitebene kann beispielsweise parallel mit der zweiten Schneidebene ausgebildet sein.

Das erste Schneidelement 102 in Fig. 3 weist eine Kegelstumpfform auf. Das erste Schneidelement 102 weist an seiner ersten Drehachse 108 einen Befestigungsbereich 304 auf, welcher in einer Befestigungsebene ausgebildet ist. Die umlaufende erste Schneidkante 103 verläuft innerhalb der ersten Schneidebene, wobei die Befestigungsebene von der Schneidebene entlang der Drehachse 108 beabstandet ist. Zwischen der umlaufenden ersten Schneidkante 103 und dem Befestigungsbereich 304 ist die Schneidfläche 113 des Schneidelements 102 ausgebildet.

In Fig. 3 ist das Schneidelement 102 derart relativ zum Streichblech 109 angeordnet, dass ein Bereich des Schneidelements 102 mit dem Streichblech 109 überlappt, insbesondere in Richtung erster Drehachse 108 des ersten Schneidelements 102 gesehen überlappt, wobei lediglich der erste Schneidbereich 104 von dem Streichblech 109 in Richtung Pflügrichtung 110 hervorragt.

Der Aufnahmebereich 302 des Streichblechs 109 ist z.B. mittels einer Vertiefung gebildet, welche an die Dimension bzw. an das Profil des ersten Schneidelements 102 angepasst ist.

Das Streichblech 109 weist ferner ein Abkratzelement 303 auf, welches in einem vorbestimmten Abstand zu der ersten Schneidkante 103 derart angeordnet ist, dass Bodenanhaftungen am ersten Schneidelement 102 mittels Rotation des ersten Schneidelements 102 von diesem abkratzbar sind. Zwischen dem Abkratzelement 303 und der ersten Schneidkante 103 kann beispielsweise ein Spalt vorgesehen werden, welcher an der schmalsten Stelle zwischen der ersten Schneidkante 103 und dem Abkratzelement beispielsweise 0,5 cm bis 5 cm beträgt.

In Fig. 3 ist das Abkratzelement 303 im oberen Bereich des Streichblechs 109 ein Abweisblech bzw. eine Leiste, welche in einem vorbestimmten Abstand angeordnet ist. Im unteren Bereich des Streichblechs 109 ist das Abkratzelement 303 eine Kante, welche mittels eines Schlitzes zwischen dem Leitblech 107 und dem Streichblech 109 gebildet wird. Das Schneidelement ist teilweise durch den Schlitz geführt, so dass anhaftende Erde mittels der Kante abgestreift wird.

**Fig. 4** eine schematische Darstellung eines bombierten Schneidelements 102. Beispielsweise kann das zweite Schneidelement 105 entsprechend ausgebildet werden. In der ersten Schneidkante 103 sind Aussparungen 119 ausgebildet. Damit kann eine verbesserte Schneidwirkung des Schneidelements 102 beim Abtrennen des Erdbalkens 201 erzielt werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

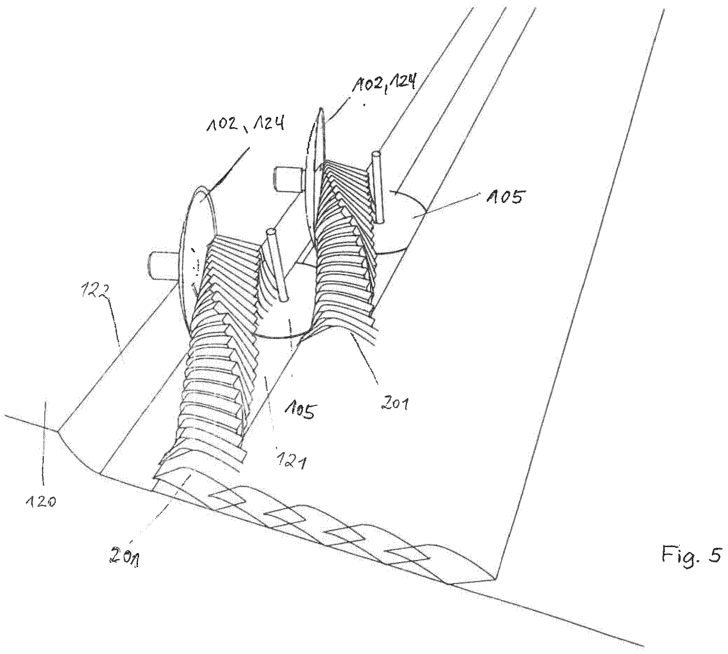

In **Fig. 5** ist in prinzipieller Darstellung eine Doppelanordnung bzw. Tandemanordnung von erfindungsgemäßen Pflugvorrichtungen dargestellt, bei welcher jeweils ein zweites Schneidelement 105 einem ersten Schneidelement 102 in Form einer Hohlscheibe 124 vorweglaufend angeordnet ist. Das vorweglaufende zweite Schneidelement 105 ist in Form einer im Wesentlichen waagerechten scheibenförmigen Schneideinrichtung ausgebildet, welche eine Furchensohle 121 im Boden 120 vorschneidet. Räumlich diesem zweiten Schneidelement nachgeordnet ist ein erstes Schneidelement 102, welches in der Form eines Hohlrades einen Seitenbereich 122 einer Furche schneidet. Durch die beiden tellerförmigen bzw. scheibenartigen Schneidelemente 102, 105 wird ein Erdbalken 201 vom ungepflügten Mutterboden abgetrennt, und während der Vorwärtsbewegung des Pfluges, was in Fig. 5 in Richtung nach oben erfolgt, wird der Erdbalken durch die Wölbung des Hohltellers 124 geschoben, so dass sich der Erdbalken schraubenförmig windet und nach Auslaufen aus dem Hohlteller 124 in der Furche gewendet ablegbar ist.

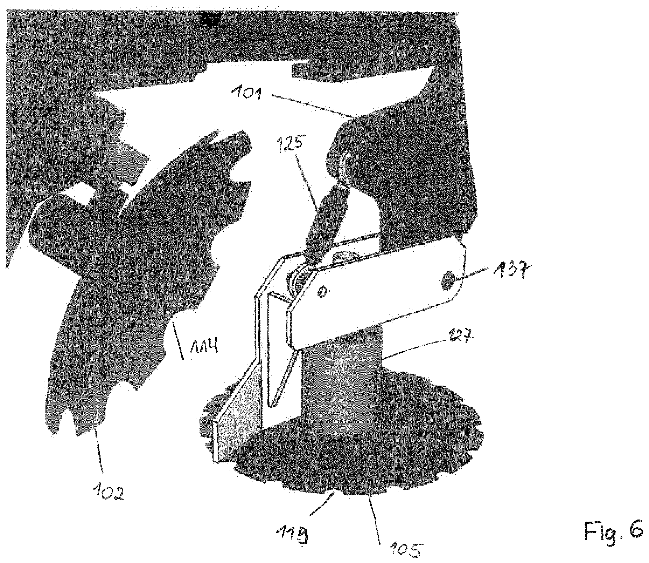

**Fig. 6** zeigt ein Ausführungsbeispiel gemäß der Erfindung mit zwei Schneidelementen, welche tellerartig bzw. scheibenförmig ausgebildet sind. An einer Trägerstruktur 101 ist das erste Schneidelement 102 angeordnet, vor welchem in Pflügrichtung das zweite Schneidelement 105 angeordnet ist. Das erste Schneidelement 102 ist hohltellerartig ausgebildet und weist eine Kugelkalottenform und eine erste Schneidkante auf, welche mit Aussparungen 114 versehen ist, so dass eine gezahnte erste Schneidkante 103 entsteht. Dieses erste Schneidelement 102 ist so an der Trägerstruktur 101 befestigt, dass es leicht geneigt ist und mit der Hohltellerform auf den in Pflügrichtung 110 hinteren Teil des zweiten Schneidelementes 105 weist. Dieses erste Schneidelement 102 dient dazu, von einem nicht dargestellten Bodenbereich eine seitliche Schneidfläche 113 (nicht gezeigt) zu schneiden, welche gleichzeitig die Seitenfläche eines nicht dargestellten Erdbalkens 201 bildet. In Pflügrichtung 110 vorlaufend zu diesem ersten Schneidelement 102 ist das zweite Schneidelement 105, welches als im Wesentlichen ebene Scheibe 106 ebenfalls Aussparungen 119 aufweist. Dadurch entsteht eine gezahnte Schneidkante 106 für das zweite Schneidelement 105. Durch diese gezahnte Schneidkante 106 ist vor allen Dingen im Falle des Nichtantreibens eine bessere Rotation beim Ziehen der erfindungsgemäßen Pflugvorrichtung 100 durch den zu pflügenden Boden gewährleistet. Das zweite Schneidelement 105 ist innerhalb einer Hülse bzw. Trommel 138 mittels einer innenliegenden Lagerung 127 über eine Welle mit der Trägerstruktur 101 verbunden. Über eine mit der Trägerstruktur 101 verbundene Schwenkachse ist eine Neigungsverstellung 137 der Ebene des zweiten Schneidelementes 105 möglich. Dazu ist an der Trägerstruktur 101 eine Winkelblechstruktur angeordnet, an welcher ein Querbolzen eine Winkelverstellvorrichtung 125 trägt, welche an ihrer gegenüberliegenden Seite direkt mit der Träger 101 verbunden ist. Durch Verstellung der Winkeleinstellvorrichtung 125 kann der Anstellwinkel α (hier nicht eingezeichnet) für das zweite Schneidelement 105 eingestellt werden.

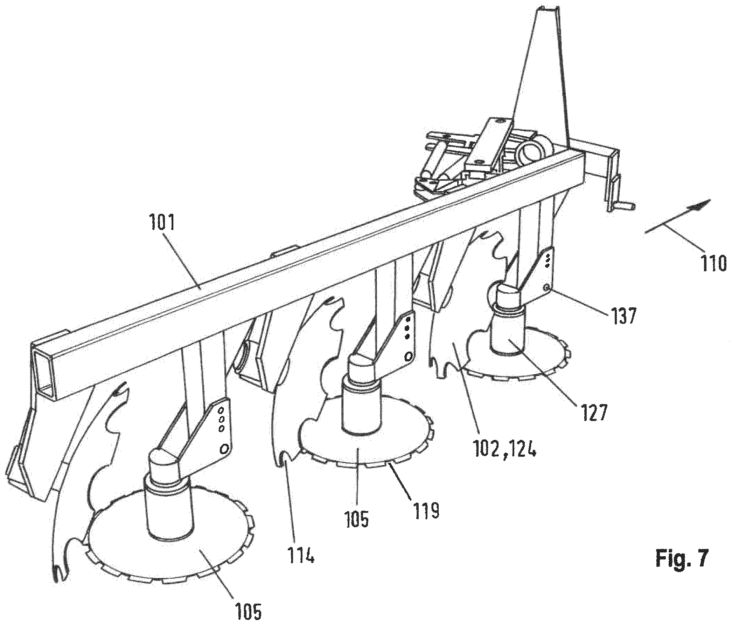

**Fig. 7** zeigt die prinzipielle Anordnung der Pflugvorrichtung 100 mit einem ersten hohltellerförmigen Schneidelement 102 und einem zweiten scheibenartigen Schneidelement 105 gemäß Fig. 6, jedoch in Dreifachanordnung hintereinander an der Trägerstruktur 101. Die grundsätzlichen Bauelemente sind identisch mit denen von Fig. 6, so dass dies hier nicht weiter wiederholt wird.

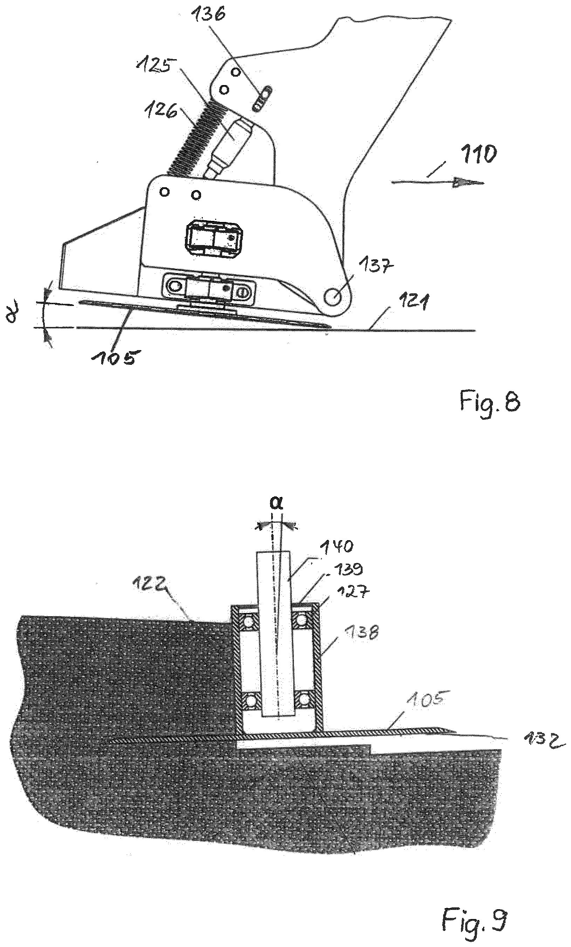

In **Fig. 8** ist eine mechanische Tiefen-Einzugsregelung für das zweite Schneidelement 105 gezeigt. Das zweite Schneidelement 105 ist in Pflügrichtung 110 mit einem Anstellwinkel α gegenüber der Horizontalen zur Furchensohle 121 nach unten geneigt. Der Einzug des Pfluges wird über die Anstellung des ansonsten horizontalen scheibenförmigen Schneidelementes 105 um den Winkel α gewährleistet. Der Drehpunkt einer Neigungsverstellung 137 für das zweite scheibenförmige Schneidelement 105 ist in Pflügrichtung 110 möglichst nahe der Furchensohle 121 platziert, so dass sich das zweite Schneidelement 105 durch die beim Pflügen als Erdbalken abgetrennte Erde selbsttätig unter der Wirkung des abgeschnittenen Erdbalkens (nicht gezeigt) horizontal ausrichtet. Die erforderliche Einzugskraft wird dabei über eine Feder 126 sichergestellt, die über die einstellbare Vorspannkraft die Anstellung bewirkt. Fällt das auf das zweite Schneidelement 105 wirkende Gewicht des Erdbalkens 201 ab, bewirkt die Federkraft einen größeren Anstellwinkel, und der Pflug zieht in die Erde ein. Hat der Pflug die angestrebte Arbeitstiefe erreicht, richtet sich das zweite Schneidelement 105 automatisch horizontal aus, wodurch der Widerstand auf ein Minimum reduziert wird. Zusätzlich kann über die einstellbare Winkeleinstellvorrichtung 125 in Form beispielsweise einer einstellbaren Strebe in Verbindung mit einem Langloch 136 der Winkeleinstellvorrichtung ein Mindestanstellwinkel vorgegebenen werden.

Es ist jedoch auch möglich, dass anstelle der Feder 126 ein Hydraulikzylinder eingesetzt wird, wodurch sich eine hydraulische Tiefen- und Einzugsregelung realisieren lässt. Durch eine derartige hydraulische Tiefen- und Einzugsregelung werden flexible Möglichkeiten für eine Steuerung und Regelung der Arbeitstiefe und der Einzugskraft ermöglicht. Hierbei ist es auch möglich, die Position des Drehpunktes, das heißt der Neigungsverstellung 137, zu verändern, wodurch sich zusätzliche konstruktive Freiheiten ergeben. Damit ist sogar eine Ausführung in Form einer Zugkraftregelung auf diese Art und Weise realisierbar.

In **Fig. 9** ist das zweite Schneidelement 105 mit einer innenliegenden Lagerung 127 in einem Rohr dargestellt, welche auch als Trommellagerung bezeichnet wird. Dieses Ausführungsbeispiel sieht vor, dass die drehende Lagerung des horizontalen, scheibenförmigen zweiten Schneidelementes 105 in einem Rohr bzw. in einer Trommel 138 untergebracht ist. Dieses Rohr ist fest mit dem zweiten Schneidelement 105 verbunden. Innerhalb des Rohres sind innenliegende Lager angeordnet, welche auf einer feststehenden Lagerungswelle 140 für das zweite Schneidelement 105 sitzen. Diese Lagerungswelle 140 ist ihrerseits mit der Trägerstruktur 101 des Pfluges verbunden. Dadurch ergibt sich der wesentliche Vorteil, dass die Lager 143 bei entsprechender Abdichtung an der Oberseite des Rohres bzw. der Trommel 138 mittels einer Abdeckung 139 vollkommen geschützt gegen Erdpartikel und Staub angeordnet sind. Zusätzlich übernimmt das sich drehende Rohr bzw. die sich drehende Trommel 138 eine Abstützfunktion gegen die Furchenwand 122. Dadurch können die Reibkräfte im Vergleich zu einer Ausführung mit starrer Anlage weiter reduziert werden. Die Drehachse der Lagerungswelle 140 kann in vorteilhafter Weise um einen Winkel α gegenüber der Senkrechten geneigt angeordnet sein, um zu gewährleisten, dass zwischen der unteren Seite 132 des zweiten Schneidelementes 105 und der Furchensohle 121, welche durch das vorangegangene Pflugelement geschnitten worden ist, Freischnitte entstehen, welche ebenfalls zur Zugkraftminimierung beitragen.

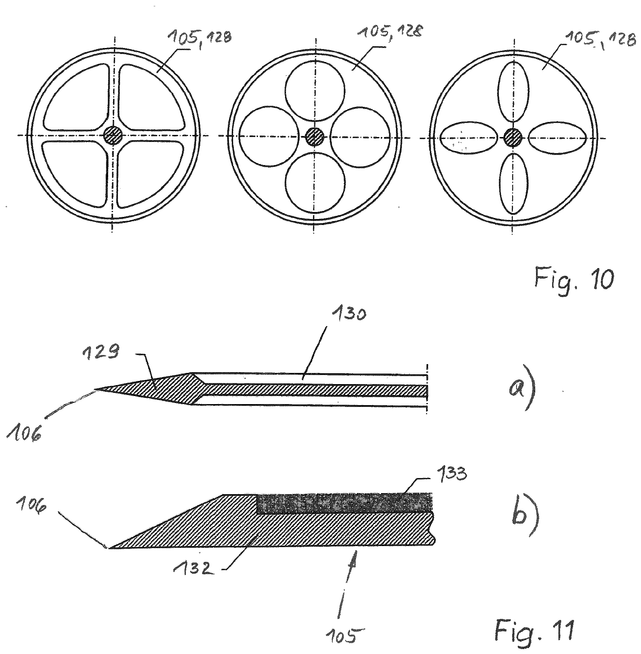

In **Fig. 10** ist das zweite Schneidelement 105 als Speichenrad 128 dargestellt. Die drei verschiedenen Varianten eines Speichenrades zeigen unterschiedliche Speichenformen. Dem Grunde nach handelt es sich jedoch stets um ein Rad, welches über Speichen mit einer Nabe im Zentrum des Speichenrades verbunden sind. Aufgrund des Vorsehens von Speichen mit den entsprechenden Freiräumen dazwischen können die Reibkräfte zwischen dem horizontalen zweiten Schneidelement 105 und der Erde weiter reduziert werden, weil sich die wirksame Kontaktfläche verringert. Dabei ist es unerheblich, ob die Speichen des Speichenrades 128 mit geraden oder gekrümmten Speichen ausgeführt sind. Auch ist es möglich die Speichenanzahl zu variieren, wobei der Zwischenraum zwischen den Speichen kreissegmentartige, als kreisrunde oder als elliptische Ausnehmung ausgebildet sein kann. Gleichermaßen kann eine derartige Ausbildung des zweiten Schneidelementes 105 auch auf das erste Schneidelement 102, das heißt die Hohlscheibe 124, angewendet werden.

Zur weiteren Reduzierung des Widerstandes beim Durchziehen der Pflugvorrichtung 100 durch den zu pflügenden Boden kann es außerdem bevorzugt sein, das horizontale, scheibenförmige Schneidelement 105 gemäß Fig. 11a) so auszubilden, dass sich der Querschnitt des Schneidelements 105 unmittelbar nach der zweiten Schneidkante 106 verjüngt, wodurch die Anpresskräfte des Bodens auf das Schneidelement und die damit wirkenden Reibkräfte reduziert werden.

Diese Verjüngung des Querschnittes kann einseitig oder beidseitig als Hinterschneidung 130 hinter der vorlaufenden Schneidspitze ausgebildet sein. Bei einseitiger Ausbildung ist die Hinterschneidung 130 beispielsweise nur an der Oberseite des zweiten Schneidelementes 105 ausgebildet, wohingegen auch eine Hinterschneidung nur an der Unterseite des zweiten Schneidelementes möglich ist. Ein Hinterschnitt sowohl an der Oberseite als auch an der Unterseite des zweiten Schneidelementes ist jedoch bevorzugt (Fig. 11a)).

Gemäß Fig. 11b) ist das zweite Schneidelement 105 als Kompositwerkstoff bzw. als Verbundwerkstoff ausgebildet. Die Schneidspitze sowie der untere Mittelkörper des scheibenförmig ausgebildeten zweiten Schneidbereiches 105 besteht dabei aus Stahl, wohingegen die nach oben weisende Oberfläche 133 des zweiten Schneidelementes 105 aus verschleißfestem und haftverminderndem Kunststoff besteht.

Eine haftvermindernde Beschichtung oder eine haftvermindernde Schicht auf der Oberseite 133 des zweiten Schneidelementes 105 ist vor allen Dingen bei schweren, klebrigen und humosen Bodenverhältnissen im Sinne eines deutlichen Vorteils von Bedeutung.

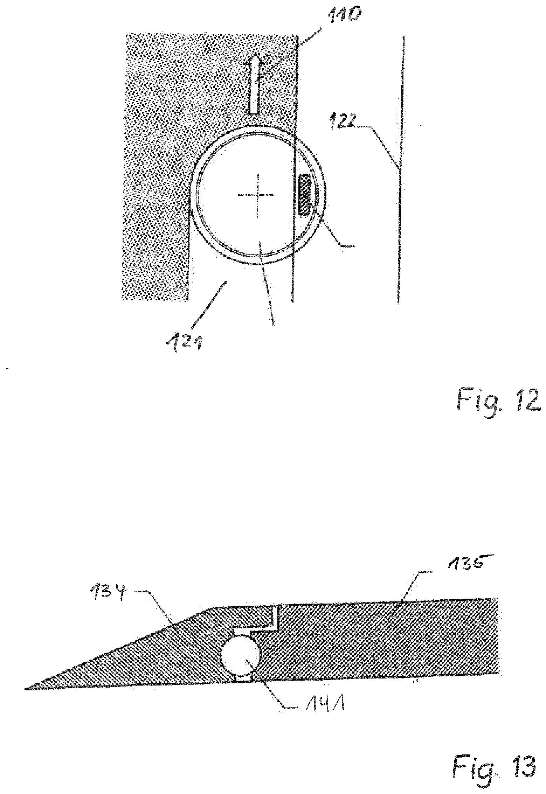

In **Fig. 12/Fig. 13** ist ein zweites Schneidelement 105 als zweiteilig ausgebildetes Schneidelement dargestellt, bei welchem ein feststehender mittlerer Teller, das heißt ein feststehendes Rad 135 vorhanden ist, an welchem über eine Lagerung 141 ein die Spitze des zweiten Schneidelementes 105 ausbildender Schneidenring 134 angeordnet ist, welcher sich über die Lagerung 141 um das feststehende Innenrad 134 dreht. Ein wesentlicher Vorteil einer derartigen Ausgestaltung besteht auch darin, dass die Befestigung dieses zweiten Schneidelementes 105 an der Trägerstruktur 101 nicht mehr wie bei einer starren Scheibe zwingend in der Mitte erfolgen muss. Dadurch kann verhindert werden, dass der nicht im Eingriff befindliche Teil der zweiten Schneidkante 106 in den bereits gepflügten Bodenbereich hineinragt, wie dies bei einer mittig gelagerten Scheibe zwangsläufig der Fall ist.

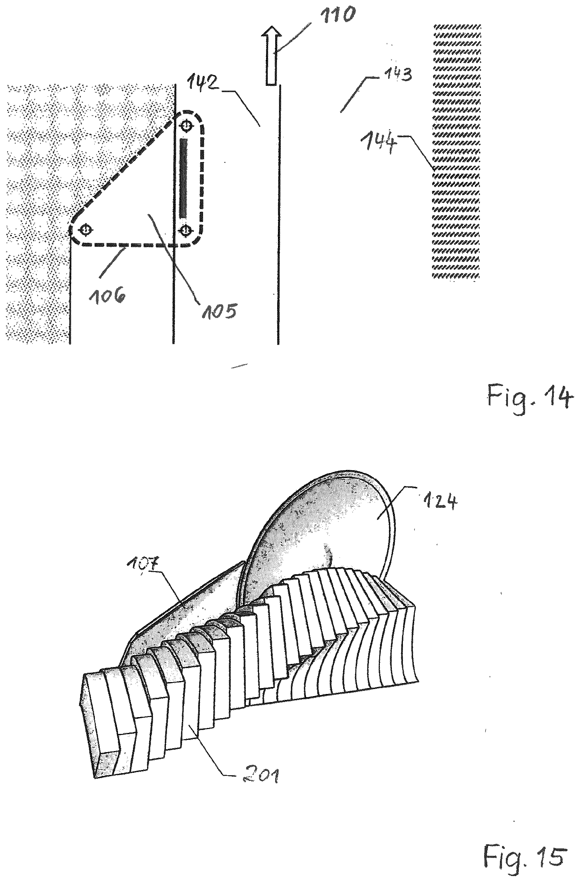

In **Fig. 14** ist ein horizontales, scheibenförmiges zweites Schneidelement 105 in Form einer flexiblen umlaufenden Schneidkante 106 dargestellt, welche in der Art einer Kettensäge ausgebildet ist. Daraus ergibt sich der Vorteil, dass die Lagerung und Befestigung des zweiten Schneidelementes 105 nicht wie bei den starren scheibenförmigen Schneidelementen zwingend in der Mitte erfolgen muss. Dadurch kann verhindert werden, dass die nicht im Eingriff befindliche Schneidkante 106 in den bereits gepflügten Bodenbereich hineinragt, was bei einer starren Scheibe zwangsläufig der Fall ist. Es versteht sich, dass die Schneidkante 106 entweder passiv oder auch aktiv angetrieben ausgeführt sein. Unter passiv angetrieben soll verstanden werden, dass beim Ziehen der Pflugvorrichtung 100 durch den Boden durch die Reibkräfte die Schneidkante sich bewegt. Unter "aktiv angetrieben" wird verstanden, dass ein Antriebsaggregat vorgesehen ist, welches das zweite Schneidelement mit den Kettengliedern in Bewegung setzt. Es ist aber auch möglich, dass keine umlaufenden Kettenglieder vorhanden sind, vielmehr ein Schneidelement in einer von einer Kreisform abweichenden Form die Furchensohle schneidet.

In Fig. 15 schließlich eine vertikal angeordnete Hohlscheibe 124 vorgesehen, welche in vergleichbarer Weise wie bei einem herkömmlichen Streichblechpflug angeordnet ist, welche eine vollständige Wendung des Erdbalkens 201 gewährleistet, weshalb es unter Umständen erforderlich sein kann, dass hinter dem im Wesentlichen vertikal angeordneten ersten Schneidelement 102 der Hohlscheibe 124, ein zusätzliches Leitblech 107 vorgesehen ist. Dieses Leitblech 107 hat lediglich die Aufgabe, die von der Hohlscheibe 124 bereits eingeleitete Wendung des Erdbalkens 201 zu vollenden, wobei kaum mehr Kräfte zwischen dem Leitbleich 107 und dem Erdbalken 201 wirken. Bei einem am Pflugrahmen an hinterster Position angeordneten Pflugelement kann dieses Leitblech 107 zusätzlich die Furchenräumung unterstützen, um für die nächstfolgende Fahrt eine ausreichend breitgeräumte Furche für die Räder des Zugfahrzeuges zu erhalten.

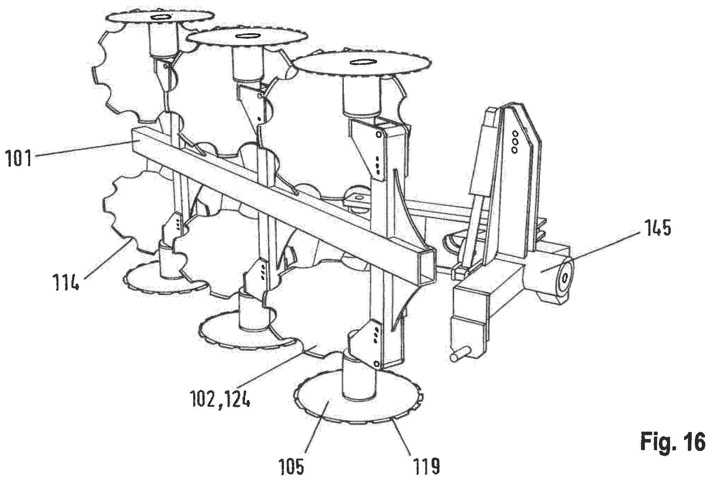

Figur 16 zeigt einen Wendepflug mit jeweils drei Scheibenpaaren (erstes 102 und zweites Schneidelement 105) auf jeder Seite der Pflugvorrichtung 100, welche über eine Ankuppelungsvorrichtung 145 mit einem den Pflug ziehenden Fahrzeug verbunden ist. Beim Wendevorgang wird der Pflug um 180° gewendet, so dass die entgegengesetzten Scheibenpaare zum Einsatz gelangen.

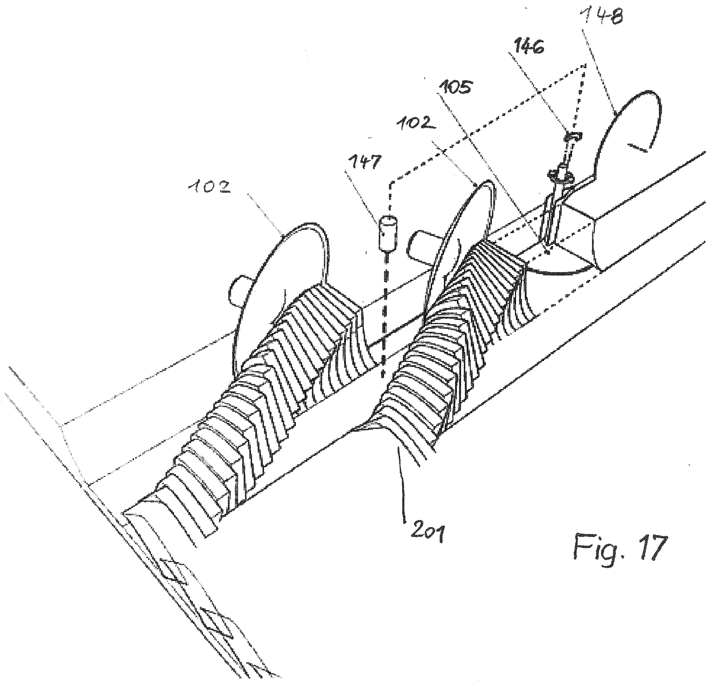

In Fig. 17 ist ein weiteres Ausführungsbeispiel dargestellt, bei welchem das vorlaufende zweite Schneidelement 105 zum Schneiden der Unterseite des Erdbalkens 201 und damit zur Erzeugung der Furchensohle als angetriebenes zweites Schneidelement ausgebildet ist. Das vorlaufende zweite Schneidelement 105 hat eine Schneidbreite, welche im Falle der Ausbildung des zweiten Schneidelements 105 als Schneidscheibe deren Durchmesser entspricht, welche eine derartige Größe aufweist, dass sie für zwei nachfolgende erste Schneidelemente 102 geeignet ist. Die beiden ersten Schneidelemente 102 sind schräg hintereinander und versetzt zueinander angeordnet, so dass das unmittelbar dem zweiten Schneidelement 105 folgende erste erste Schneidelement 102 einen ersten Erdbalken 201 von der zu pflügenden Erde ab- bzw. heraustrennt und mittels dem dann schräg nach hinten versetzt angeordneten zweiten ersten Schneidelement 102 ein zweiter Erdbalken vom zu pflügenden Erdreich geschnitten wird. Das bedeutet, dass mit dem bezüglich der Schneidbreite relativ breit ausgebildeten zweiten Schneidelement sozusagen zwei benachbarte Furchensohlen gleichzeitig geschnitten werden. Damit das zweite Schneidelement 105 eine solche Doppelaufgabe erfüllen kann, muss es mit seinem Schaft, über welchen dieses zweite Schneidelement 105 aktiv angetrieben ist, in eine von einem vorlaufenden Vorschneidsech geschnittene Trennspalte eingeführt werden. Bei einer derartigen Anordnung muss das zweite Schneidelement 105 angetrieben sein, da bei einer symmetrischen Ausbildung keine Kräfte vorhanden sind, die Scheibe ohne Antrieb in Rotation zu versetzen bei ihrem Durchführen bzw. Durchziehen durch das zu pflügende Erdreich.

Aufgrund des vorlaufenden Vorschneidsechs wird aber gerade der Widerstand des Schaftes beim Ziehen der Pflugvorrichtung durch das ungepflügte Erdreich auf ein Minimum reduziert. Zusätzlich ist gemäß diesem Ausführungsbeispiel ein Tiefenregler vorgesehen, welcher überwacht und sicherstellt, dass das zweite Schneidelement in der gewünschten Tiefe die Furchensohle schneidet. Dafür ist ein Distanzregler 147 vorgesehen, welcher im Bereich zwischen dem ersten ersten Schneidelement 102 und dem zweiten ersten Schneidelement angeordnet ist. Der Distanzsensor 147 liefert ein Tiefensignal der geschnittenen Furchen an den Tiefenregler 146, so dass beim Pflügen gewährleistet ist, dass eine gewünschte Pflügtiefe eingehalten werden kann.

**Bezugszeichenliste:**

| | | | |
|---|---|---|---|
| 100 | Pflugvorrichtung | | |
| 101 | Trägerstruktur | 133 | Oberseite zweites Schneidelement |
| 102 | erstes Schneidelement | 134 | rotierender Schneidenring |
| 103 | erste Schneidkante | 135 | feststehendes Innenrad |
| 104 | erster Schneidbereich | 136 | Langloch Winkeleinstelleinrichtung |
| 105 | zweites Schneidelement | 137 | Neigungsverstellung |
| 106 | zweite Schneidkante | 138 | Trommel |
| 107 | Leitblech | 139 | Abdeckung |
| 108 | erste Drehachse | 140 | Lagerungswelle zweites Schneidelement |
| 109 | Streichblech | | |
| 110 | Pflügrichtung | 141 | Lagerungswelle Schneidenring |
| 111 | erstes Trägerelement | 142 | umlaufende Schneidkante |
| 112 | zweites Trägerelement | 143 | Lager Schneidelement |
| 113 | Schneidfläche | 144 | gepflügter Bereich |
| 114 | Aussparung erstes Schneidelement | 145 | Ankupplungsvorrichtung |
| 115 | Bolzenverbindung | 146 | Tiefenregler |
| 116 | Langloch | 147 | Distanzsensor |
| 117 | zweite Drehachse | 148 | Vorschneidsech |
| 118 | zweiter Schneidbereich | | |
| 119 | Aussparung zweites Schneidelement | 201 | Erdbalken |
| | | 202 | Seitenbereich |
| 120 | Boden | 203 | Bodenbereich |
| 121 | Trennfläche / Furchensohle | | |
| 122 | Furchenwand | 301 | Erstreckungsrichtung |
| 123 | Förderrichtung Erdbalken | 302 | Aufnahmebereich |
| 124 | Hohlteller | 303 | Abkratzelement |
| 125 | Winkeleinstellvorrichtung | 304 | Befestigungsbereich |
| 126 | Feder | | |
| 127 | innenliegende Lagerung | | |
| 128 | Speichenrad | x | Abstand Schneidbereiche |
| 129 | verjüngende Schneidkante | α | Anstellwinkel zweites Schneidelement |
| 130 | Hinterschneidung | | |
| 131 | Speichenbereich | | |
| 132 | untere Seite zweites Schneidelement | | |

## Patentansprüche

1. Pflugvorrichtung (100) zum Pflügen eines Bodens (120), die Pflugvorrichtung (100) aufweisend
- eine Trägerstruktur (101),
- ein rotierbares erstes als Schneidteller ausgebildetes Schneidelement (102) mit einer umlaufenden ersten Schneidkante (103),
wobei das erste Schneidelement (102) an der Trägerstruktur (101) angeordnet ist und derart ausgebildet ist, dass bei Bewegen der Trägerstruktur (101) auf dem Boden (120) entlang einer Pflügrichtung (110) ein Seitenbereich (202) eines Erdbalkens (201) des Bodens (120) mittels eines ersten Schneidbereichs (104) der ersten Schneidkante (103) abschneidbar ist,
- ein zweites scheibenförmiges Schneidelement (105) mit einer zweiten Schneidkante (106),
wobei das zweite Schneidelement (105) an der Trägerstruktur (101) angeordnet ist und derart ausgebildet ist, dass bei Bewegen der Trägerstruktur (101) auf dem Boden (120) entlang einer Pflügrichtung (110) ein Bodenbereich (203) eines Erdbalkens (201) des Bodens (120) mittels eines zweiten Schneidbereichs (118) der zweiten Schneidkante (106) abschneidbar ist,
wobei das zweite Schneidelement (105) relativ zu dem ersten Schneidelement (102) in Pflügrichtung (110) derart angeordnet ist, dass der zweite Schneidbereich (118) in Pflügrichtung vor dem ersten Schneidbereich (104) angeordnet ist und die Schneidelemente (102, 105) durch den Erdbalken (201) beim Pflügen in Rotation versetzbar sind,
**dadurch gekennzeichnet,**
**dass** die Pflugvorrichtung ferner ein Streichblech (109) aufweist, welches entlang der Pflügrichtung (110) hinter dem ersten Schneidbereich (104) des ersten Schneidelements (102) an der Trägerstruktur (101) angeordnet ist,
wobei das Streichblech (109) eine Förderfläche aufweist, entlang welcher der Erdbalken (201) nach Abtrennung von dem Boden (120) förderbar ist,
wobei die Förderfläche derart gewölbt ausgebildet ist, dass bei Entlangstreichen des Erdbalkens (201) entlang der Förderfläche der Erdbalken (201) wendbar ist.

2. Pflugvorrichtung nach Anspruch 1, **dadurch gekennzeichnet, dass** das erste Schneidelement (102) gleichzeitig mit dem Schneiden des Erdbalkens (201) mit einer durch den Erdbalken (201) auf ein eine Pflugschar darstellendes Leitblech (107) drückenden Druckkraft in seiner gewünschten Schneidtiefe gehalten wird.

3. Pflugvorrichtung (100) gemäß einem der Ansprüche 1 bis 2, wobei das erste Schneidelement (102) und zweite Schneidelement (105) derart zueinander angeordnet sind, dass der Schneidbereich (104) der ersten Schneidkante (103) des ersten Schneidelements (102) von der zweiten Schneidkante (106) des zweiten Schneidelements (105) vertikal beabstandet ist.

4. Pflugvorrichtung (100) gemäß einem der Ansprüche 1 bis 3, wobei der erste Schneidbereich (104) innerhalb einer ersten Schneidebene und der zweite Schneidbereich (118) in einer zweiten Schneidebene ausgebildet sind,
wobei die erste Schneidebene und die zweite Schneidebene zueinander einen Winkel von 30° bis 135°, insbesondere 45° bis 110°, ausbilden, insbesondere wobei die erste Schneidkante (103) des ersten Schneidelements (102) und/oder die zweite Schneidkante (106) des zweiten Scheidelementes (105) mit jeweiligen Aussparungen (114, 119) versehen und damit gezähnt oder gezackt sind/ist.

5. Pflugvorrichtung (100) gemäß einem der Ansprüche 1 bis 4, wobei die zweite Schneidkante (106) eine das zweite Schneidelement (105) umlaufende Schneidkante ist, insbesondere wobei das erste Schneidelement (102) eine Kegelform oder eine Kegelstumpfform aufweist und/oder das zweite Schneidelement (105) eine Kegelform oder eine Kegelstumpfform aufweist.

6. Pflugvorrichtung (100) gemäß einem der Ansprüche 1 bis 5, wobei das Streichblech (109) einen Aufnahmebereich (302) zur Aufnahme des ersten Schneidelements (102) aufweist, wobei das erste Schneidelement (102) derart in dem Streichblech (109) aufgenommen ist, dass der erste Schneidbereich (104) der ersten Schneidkante (103) in Pflügrichtung (110) von dem Streichblech (109) hervorragt.

7. Pflugvorrichtung (100) gemäß Anspruch 1 oder 6, wobei die Trägerstruktur (101) derart ausgebildet ist, dass das erste Schneidelement (102) und/oder das zweite Schneidelement (105) entlang der Pflügrichtung (110) relativ zu dem Streichblech (109) einstellbar sind, oder derart ausgebildet ist, dass das Abstand zwischen dem ersten Schneidbereich (104) der ersten Schneidkante (103) des ersten Schneidelements (102) und dem zweiten Schneidbereich (118) der zweiten Schneidkante (106) des zweiten Schneidelements (105) einstellbar ist.

8. Pflugvorrichtung (100) nach einem der Ansprüche 1 bis 7, bei welcher das erste Schneidelement (102) derart hohltellerartig mit einer Krümmung seiner Innenoberfläche ausgebildet ist, dass beim Pflügen der seitlich vom Boden (120) mittels des ersten Schneidelementes (102) abgetrennte Erdbalken (201) durch die Krümmung der Innenoberfläche gewunden und nach seinem Austreten aus dem Hohlteller (124) als gewendeter Erdbalken (201) auf dem Boden (120) in der Furche wieder ablegbar ist.

9. Pflugvorrichtung (100) nach einem der Ansprüche 1 bis 8, bei welcher das zweite Schneidelement (105) bezüglich seines Anstellwinkels α eine Winkelverstelleinrichtung (125) aufweist, mittels welcher ein in Pflügrichtung (110) positiver Anstellwinkel α einstellbar ist, und insbesondere bei welcher mittels der Winkelverstelleinrichtung (125) der Anstellwinkel α mechanisch oder hydraulisch oder elektrisch einstellbar ist.

10. Pflugvorrichtung (100) nach Anspruch 9, bei welcher eine Feder (126) eine erforderliche Einzugskraft beim Bewegen des zweiten Schneidelementes (105) entlang der Furchensohle (121) sichert und eine solche Federkraft aufweist, dass das zweite Schneidelement (105) unter dem Gewicht des Erdbalkens (201) sich im Wesentlichen waagrecht ausrichtet.

11. Pflugvorrichtung (100) nach einem der Ansprüche 1 bis 10, bei welcher das zweite Schneidelement (105) eine in einem Rohr angeordnete innenliegende Lagerung (127) in der Art einer Trommellagerung und insbesondere als Speichenrad (128) ausgebildet ist und/oder eine sich verjüngende Schneidkante (129) mit Hinterschneidung (130) im Speichenbereich (131) aufweist.

12. Pflugvorrichtung (100) nach einem der Ansprüche 1 bis 11, bei welcher das zweite Schneidelement (105) aus einem Verbundwerkstoff besteht, insbesondere dessen der Furchensohle (121) zugewandte untere Seite (132) sowie dessen Schneide aus Stahl besteht und dessen dem Erdbalken (201) zugewandte Oberseite (133) einen verschleißfesten und haftverminderten Kunststoff besteht.

13. Pflugvorrichtung (100) nach einem der Ansprüche 1 bis 12, bei welcher das zweite Schneidelement (105) zweiteilig ausgebildet ist und einen rotierenden Schneidenring (134) aufweist, welcher über ein Lager gegenüber einem feststehenden Innenrad (135) abgestützt und insbesondere aktiv angetrieben ausgebildet ist.

14. Pflugvorrichtung (100) nach einem der Ansprüche 1 bis 13, bei welcher das zweite Schneidelement (105) ein Schneidmesser ist oder aktiv angetrieben ist und eine Schneidbreite aufweist, welche für zumindest zwei nachlaufende erste Schneidelemente (102) den Bodenbereich (203) des Erdbalkens (201) schneidet.

15. Verfahren zum Pflügen eines Bodens (120), das Verfahren aufweisend
- Bewegen einer Trägerstruktur (101) auf dem Boden (120) entlang einer Pflügrichtung (110),
- Abschneiden eines Seitenbereiches (202) eines Erdbalkens (201) des Bodens (120) mittels eines ersten Schneidbereichs (104) einer ersten Schneidkante (103) eines ersten als Schneidteller ausgebildeten Schneidelements (102), welches an der Trägerstruktur (101) angeordnet ist, und
- Abschneiden eines Bodenbereiches (203) eines Erdbalkens (201) des Bodens (120) mittels eines zweiten scheibenförmigen Schneidbereichs (118) einer zweiten Schneidkante (106) eines zweiten Schneidelements (105), welches an der Trägerstruktur (101) angeordnet ist,
wobei in Pflügrichtung (110) das zweite Schneidelement (105) mit seinem zweiten Schneidbereich (118) relativ zu dem ersten Schneidbereich (104) des ersten Schneidelements (102) vorläuft und
- fördern des Erdbalkens (201) nach Abtrennung vom Boden entlang der Förderfläche eines Streichblechs (109), welches entlang der Pflügrichtung hinter dem ersten Schneidbereich (104) des ersten Schneidelements (102) an der Trägerstruktur (101) angeordnet ist
wobei die Förderfläche derart gewölbt ausgebildet ist, dass beim Entlangstreichen des Erdbalkens (201) entlang der Förderfläche der Erdbalken gewendet wird

16. Verfahren nach Anspruch 15, bei welchem ein in Pflügrichtung definierter Anstellwinkel α des zweiten Schneidelementes (105) mechanisch oder hydraulisch oder elektrisch verstellt wird.

## Claims

1. Plough apparatus (100) for ploughing soil (120), the plough apparatus (100) having
- a carrier structure (101),
- a rotatable first cutting element (102), in the form of a cutting disc, having an encircling first cutting edge (103),
wherein the first cutting element (102) is arranged on the carrier structure (101) and is configured such that, when the carrier structure (101) is moved on the soil (120) in a ploughing direction (110), a lateral region (202) of a furrow slice (201) of the soil (120) is able to be separated by means of a first cutting region (104) of the first cutting edge (103),
- a second disc-like cutting element (105) with a second cutting edge (106),
wherein the second cutting element (105) is arranged on the carrier structure (101) and is configured such that, when the carrier structure (101) is moved on the soil (120) in a ploughing direction (110), a bottom region (203) of a furrow slice (201) of the soil (120) is able to be separated by means of a second cutting region (118) of the second cutting edge (106),
wherein the second cutting edge (105) is arranged in the ploughing direction (110) relative to the first cutting element (102) such that the second cutting region (118) is arranged in front of the first cutting region (104) in the ploughing direction and the cutting elements (102, 105) are able to be set in rotation by the furrow slice (201) during ploughing,
**characterized**
**in that** the plough apparatus also has a mouldboard (109), which is arranged on the carrier structure (101) behind the first cutting region (104) of the first cutting element (102) in the ploughing direction (110),
wherein the mouldboard (109) has a feed face along which the furrow slice (201) is able to be fed after being separated from the soil (120),
wherein the feed face is configured in a curved manner such that, when the furrow slice (201) passes along the feed face, the furrow slice (201) is able to be turned.

2. Plough apparatus according to Claim 1, **characterized in that** the first cutting element (102), at the same time as cutting the furrow slice (201), is kept at its desired cutting depth by a pressure force applied to a guide plate (107), representing a ploughshare, by the furrow slice (201).

3. Plough apparatus (100) according to either of Claims 1 and 2, wherein the first cutting element (102) and second cutting element (105) are arranged with respect to one another such that the cutting region (104) of the first cutting edge (103) of the first cutting element (102) is spaced apart vertically from the second cutting edge (106) of the second cutting element (105).

4. Plough apparatus (100) according to one of Claims 1 to 3, wherein the first cutting region (104) is formed within a first cutting plane and the second cutting region (118) is formed in a second cutting plane,
wherein the first cutting plane and the second cutting plane form an angle of 30° to 135°, in particular 45° to 110°, with respect to one another, in particular wherein the first cutting edge (103) of the first cutting element (102) and/or the second cutting edge (106) of the second cutting element (105) is/are provided with respective cutouts (114, 119) and is/are thus toothed or serrated.

5. Plough apparatus (100) according to one of Claims 1 to 4, wherein the second cutting edge (106) is a cutting edge encircling the second cutting element (105), in particular wherein the first cutting element (102) has a conical or frustoconical shape and/or the second cutting element (105) has a conical or frustoconical shape.

6. Plough apparatus (100) according to one of Claims 1 to 5, wherein the mouldboard (109) has a receiving region (302) for receiving the first cutting element (102), wherein the first cutting element (102) is received in the mouldboard (109) such that the first cutting region (104) of the first cutting edge (103) projects from the mouldboard (109) in the ploughing direction (110).

7. Plough apparatus (100) according to Claim 1 or 6, wherein the carrier structure (101) is configured such that the first cutting element (102) and/or the second cutting element (105) are settable relative to the mouldboard (109) in the ploughing direction (110), or is configured such that the spacing between the first cutting region (104) of the first cutting edge (103) of the first cutting element (102) and the second cutting region (118) of the second cutting edge (106) of the second cutting element (105) is settable.

8. Plough apparatus (100) according to one of Claims 1 to 7, wherein the first cutting element (102) is configured in a hollow-disc-like manner with a curvature of its inner surface such that, during ploughing, the furrow slice (201) separated laterally from the soil (120) by means of the first cutting element (102) is turned by the curvature of the inner surface and, after it passes out of the hollow disc (124), is able to be placed back down on the soil (120) in the furrow as a turned furrow slice (201).

9. Plough apparatus (100) according to one of Claims 1 to 8, wherein the second cutting element (105) has, with regard to its setting angle a, an angle adjusting device (125) by means of which a positive setting angle α in the ploughing direction (110) is settable, and in particular wherein, by means of the angle adjusting device (125), the setting angle α is settable in a mechanical or hydraulic or electric manner.

10. Plough apparatus (100) according to Claim 9, wherein a spring (126) ensures a required penetration force when the second cutting element (105) is moved along the furrow bottom (121), and has such a spring force that the second cutting element (105) orients itself substantially horizontally under the weight of the furrow slice (201).

11. Plough apparatus (100) according to one of Claims 1 to 10, wherein the second cutting element (105) has an internal bearing (127), arranged in a tube, of the drum bearing type and is configured in particular as a spoked wheel (128) and/or has a narrowing cutting edge (129) with an undercut (130) in the spoke region (131).

12. Plough apparatus (100) according to one of Claims 1 to 11, wherein the second cutting element (105) consists of a composite material, in particular its lower side (132) facing the furrow bottom (121) and its blade consist of steel and its top side (133) facing the furrow slice (201) consists of a wear-resistant and reduced-adhesion plastic.

13. Plough apparatus (100) according to one of Claims 1 to 12, wherein the second cutting element (105) is formed in two parts and has a rotating blade ring (134) that is supported with respect to a fixed inner wheel (135) via a bearing and is configured in particular in an actively driven manner.

14. Plough apparatus (100) according to one of Claims 1 to 13, wherein the second cutting element (105) is a cutting knife or is actively driven and has a cutting width that cuts the bottom region (203) of the furrow slice (201) for at least two first cutting elements (102) running behind.

15. Method for ploughing soil (120), the method comprising
- moving a carrier structure (101) on the soil (120) in a ploughing direction (110),
- separating a lateral region (202) of a furrow slice (201) of the soil (120) by means of a first cutting region (104) of a first cutting edge (103) of a first cutting element (102), in the form of a cutting disc, which is arranged on the carrier structure (101), and
- separating a bottom region (203) of a furrow slice (201) of the soil (120) by means of a second disc-like cutting region (118) of a second cutting edge (106) of a second cutting element (105) that is arranged on the carrier structure (101), wherein, in the ploughing direction (110), the second cutting element (105) runs ahead with its second cutting region (118) relative to the first cutting region (104) of the first cutting element (102), and
- feeding the furrow slice (201), after it has been separated from the soil, along the feed face of a mouldboard (109) that is arranged on the carrier structure (101) behind the first cutting region (104) of the first cutting element (102) in the ploughing direction,
wherein the feed face is configured in a curved manner such that, when the furrow slice (201) passes along the feed face, the furrow slice is turned.

16. Method according to Claim 15, wherein a setting angle a, defined in the ploughing direction, of the second cutting element (105) is adjusted in a mechanical or hydraulic or electric manner.

## Revendications

1. Arrangement de labourage (100) destiné à labourer un sol (120), l'arrangement de labourage (100) comprenant
- une structure porteuse (101),
- un premier élément de coupe (102) rotatif réalisé sous la forme d'un plateau de coupe ayant une première arête de coupe (103) circulaire,
le premier élément de coupe (102) étant disposé sur la structure porteuse (101) et configuré de telle sorte que lors du mouvement de la structure porteuse (101) sur le sol (120) le long d'une direction de labourage (110), une zone latérale (202) d'une bande de labour (201) du sol (120) peut être découpée au moyen d'une première zone de coupe (104) de la première arête de coupe (103),
- un deuxième élément de coupe (105) en forme de disque ayant une deuxième arête de coupe (106),
le deuxième élément de coupe (105) étant disposé sur la structure porteuse (101) et configuré de telle sorte que lors du mouvement de la structure porteuse (101) sur le sol (120) le long d'une direction de labourage (110), une zone de sol (203) d'une bande de labour (201) du sol (120) peut être découpée au moyen d'une deuxième zone de coupe (118) de la deuxième arête de coupe (106),
le deuxième élément de coupe (105) étant disposé par rapport au premier élément de coupe (102) dans la direction de labourage (110) de telle sorte que la deuxième zone de coupe (118) est disposée avant la première zone de coupe (104) dans la direction de labourage et les éléments de coupe (102, 105) pouvant être amenés en rotation par la bande de labour (201) lors du labourage,
**caractérisé en ce que**
l'arrangement de labourage possède en plus un versoir de charrue (109), lequel est disposé sur la structure porteuse (101) derrière la première zone de coupe (104) du premier élément de coupe (102) le long de la direction de labourage (110),
le versoir de charrue (109) possédant une surface d'extraction le long de laquelle la bande de labour (201) peut être extraite après la séparation du sol (120),
la surface d'extraction étant configurée bombée de telle sorte que lors du passage le long de la bande de labour (201), la bande de labour (201) peut être retournée le long de la surface d'extraction.

2. Arrangement de labourage selon la revendication 1, **caractérisé en ce que** le premier élément de coupe (102), simultanément avec la coupe de la bande de labour (201), est maintenu dans sa profondeur de coupe souhaitée avec une force de pressage qui appuie à travers la bande de labour (201) sur une tôle de guidage (107) représentant un soc de charrue.

3. Arrangement de labourage (100) selon l'une des revendications 1 à 2, le premier élément de coupe (102) et le deuxième élément de coupe (105) étant disposés l'un par rapport à l'autre de telle sorte que la zone de coupe (104) de la première arête de coupe (103) du premier élément de coupe (102) est espacée verticalement de la deuxième arête de coupe (106) du deuxième élément de coupe (105).

4. Arrangement de labourage (100) selon l'une des revendications 1 à 3, la première zone de coupe (104) étant formée à l'intérieur d'un premier plan de coupe et la deuxième zone de coupe (118) dans un deuxième plan de coupe,
le premier plan de coupe et le deuxième plan de coupe formant entre eux un angle de 30° à 135°, notamment de 45° à 110°, la première arête de coupe (103) du premier élément de coupe (102) et/ou la deuxième arête de coupe (106) du deuxième élément de coupe (105) étant notamment pourvue(s) d'échancrures (114, 119) et étant ainsi dentée(s) ou cannelée(s).

5. Arrangement de labourage (100) selon l'une des revendications 1 à 4, la deuxième arête de coupe (106) étant une arête de coupe circulaire du deuxième élément de coupe (105), le premier élément de coupe (102) possédant notamment une forme conique ou une forme tronconique et/ou le deuxième élément de coupe (105) possédant une forme conique ou une forme tronconique.

6. Arrangement de labourage (100) selon l'une des revendications 1 à 5, le versoir de charrue (109) possédant une zone d'accueil (302) destinée à accueillir le premier élément de coupe (102), le premier élément de coupe (102) étant accueilli dans le versoir de charrue (109) de telle sorte que la première zone de coupe (104) de la première arête de coupe (103) fait saillie du versoir de charrue (109) dans la direction de labourage (110).

7. Arrangement de labourage (100) selon l'une des revendications 1 à 6, la structure porteuse (101) étant configurée de telle sorte que le premier élément de coupe (102) et/ou le deuxième élément de coupe (105) sont réglables par rapport au versoir de charrue (109) le long de la direction de labourage (110), ou étant configurée de telle sorte que l'écart entre la première zone de coupe (104) de la première arête de coupe (103) du premier élément de coupe (102) et la deuxième zone de coupe (118) de la deuxième arête de coupe (106) du deuxième élément de coupe (105) est réglable.

8. Arrangement de labourage (100) selon l'une des revendications 1 à 7, avec lequel le premier élément de coupe (102) est réalisé à la manière d'un plateau creux avec une courbure de sa surface intérieure de telle sorte que lors du labourage, la bande de labour (201) séparée latéralement du sol (120) au moyen du premier élément de coupe (102) est retournée par la courbure de la surface intérieure puis, après sa sortie hors du plateau creux (124), peut de nouveau être déposée sur le sol (120) dans le sillon sous la forme d'une bande de labour (201) retournée.

9. Arrangement de labourage (100) selon l'une des revendications 1 à 8, avec lequel le deuxième élément de coupe (105) possède un dispositif de positionnement angulaire (125) concernant son angle d'attaque □, au moyen duquel peut être réglé un angle d'attaque □ positif dans la direction de labourage (110), et notamment avec lequel l'angle d'attaque □ peut être réglé mécaniquement ou hydrauliquement ou électriquement au moyen du dispositif de positionnement angulaire (125).

10. Arrangement de labourage (100) selon la revendication 9, avec lequel un ressort (126) assure une force de rentrée nécessaire lors du déplacement du deuxième élément de coupe (105) le long du fond du sillon (121) et présente une force de ressort telle que le deuxième élément de coupe (105) s'aligne sensiblement horizontalement sous le poids de la bande de labour (201).

11. Arrangement de labourage (100) selon l'une des revendications 1 à 10, avec lequel le deuxième élément de coupe (105) possède un palier (127) intérieur disposé dans un tube à la manière d'un palier de rouleau et est réalisé notamment sous la forme de roue à rayons (128) et/ou possède une arête de coupe (129) avec contre-dépouille (130) dans la zone des rayons (131).

12. Arrangement de labourage (100) selon l'une des revendications 1 à 11, avec lequel le deuxième élément de coupe (105) se compose d'un matériau composite, notamment dont le côté inférieur (132) qui fait face au fond du sillon (121) ainsi que sa lame se composent d'acier et dont le côté supérieur (133) qui fait face à la bande de labour (201) se compose d'une matière plastique résistante à l'usure et réduisant l'adhérence.

13. Arrangement de labourage (100) selon l'une des revendications 1 à 12, avec lequel le deuxième élément de coupe (105) est réalisé en deux parties et possède un anneau de coupe (134) rotatif, lequel s'appuie par le biais d'un palier par rapport à une roue interne (135) fixe et est notamment configuré à entraînement actif.

14. Arrangement de labourage (100) selon l'une des revendications 1 à 13, avec lequel le deuxième élément de coupe (105) est un couteau ou est entraîné de manière active et possède une largeur de coupe qui coupe la zone de sol (203) de la bande de labour (201) pour au moins deux premiers éléments de coupe (102) qui suivent.

15. Procédé de labourage d'un sol (120), le procédé comprenant
- déplacement d'une structure porteuse (101) sur le sol (120) le long d'une direction de labourage (110),
- découpe d'une zone latérale (202) d'une bande de labour (201) du sol (120) au moyen d'une première zone de coupe (104) d'une première arête de coupe (103) d'un premier élément de coupe (102) réalisé sous la forme d'un plateau de coupe, lequel est disposé sur la structure porteuse (101), et
- découpe d'une zone de sol (203) d'une bande de labour (201) du sol (120) au moyen d'une deuxième zone de coupe (118) en forme de disque d'une deuxième arête de coupe (106) d'un deuxième élément de coupe (105), lequel est disposé sur la structure porteuse (101),
le deuxième élément de coupe (105) avec sa deuxième zone de coupe (118) se trouvant à l'avant par rapport à la première zone de coupe (104) du premier élément de coupe (102) dans la direction de labourage (110) et
- extraction de la bande de labour (201) après la séparation du sol le long de la surface d'extraction d'un versoir de charrue (109), lequel est disposé sur la structure porteuse (101) derrière la première zone de coupe (104) du premier élément de coupe (102) le long de la direction de labourage,
la surface d'extraction étant configurée bombée de telle sorte que lors du passage le long de la bande de labour (201), la bande de labour est retournée le long de la surface d'extraction.

16. Procédé selon la revendication 15, avec lequel un angle d'attaque □ du deuxième élément de coupe (105) défini dans la direction de labourage est réglé mécaniquement ou hydrauliquement ou électriquement.
